# EUROPEAN PATENT APPLICATION

(11) **EP 1 378 345 A1**
(43) Date of publication of application: **07.01.2004**
(21) Application number: 02707265.1
(22) Date of filing: 29.03.2002
(51) Int. Cl.: B32B 15/08, B05D 7/14, C23C 22/00

(54) **METAL PRODUCT SURFACE-TREATED WITH ALKALI-SOLUBLE LUBRICATING FILM EXHIBITING EXCELLENT FORMABILITY AND EXCELLENT FILM REMOVAL PROPERTY BEING STABLE FOR A LONG TIME AND INDEPENDENT OF TEMPERATURE FOR DRYING FILM**

(30) Priority: 30.03.2001 JP 2001099311; 30.03.2001 JP 2001099312; 12.06.2001 JP 2001176681
(71) Applicant: NIPPON STEEL CORPORATION, Tokyo 100-8071 (JP); MITSUI TAKEDA CHEMICALS, INC., Tokyo 100-6009 (JP)
(72) Inventor: YAMAOKA, I.,C/O NIPPON STEEL CORPORATION, Futtsu-shi, Chiba 293-8511 (JP); KANAI, Hiroshi, C/O NIPPON STEEL CORPORATION, Futtsu-shi, Chiba 293-8511 (JP); MIYASAKA, Akihiro, C/O NIPPON STEEL CORPORATION, Futtsu-shi, Chiba 293-8511 (JP); MORI, Yoichiro, C/O NIPPON STEEL CORPORATION, Tokyo 100-8071 (JP); TAWA, Tsutomu, C/O MITSUI TAKEDA CHEMICALS, INC., Osaka-shi, Osaka 532-0024 (JP); NISHIMURA, M., C/O MITSUI TAKEDA CHEMICALS, INC., Osaka-shi, Osaka 532-0024 (JP); KOUDA, Chikako, C/O MITSUI TAKEDA CHEMICALS, INC., Osaka-shi, Osaka 532-0024 (JP)
(74) Representative: VOSSIUS & PARTNER
(86) International application number: PCT/JP2002/003232
(87) International publication number: WO 2002/078949

(57) **Abstract**

In order to provide an alkali-soluble-film surface-lubricated metal product excellent in moldability and long-term stable film-removability independent of the film drying temperature, an alkali-soluble lubricating film mainly comprising an alkali-soluble polyurethane aqueous composition containing a polyether polyol as a skeleton and also containing a carboxyl group within the molecule, and a lubricating function-imparting agent in an amount of 1 to 30 mass% based on the alkali-soluble polyurethane aqueous composition is coated on both surfaces or one surface of a metal to have a film thickness of 0.5 to 10 µm, thereby constituting an alkali-soluble-film surface-lubricated metal product excellent in moldability and long-term stable film-removability independent of the film drying temperature, wherein the elastic modulus of the film after coating is from 0.5 to 20 GPa at 25°C.

## Description

### TECHNICAL FIELD OF THE INVENTION

The present invention relates to a surface-lubricated metal product having an alkali-soluble lubricating film, on the surface, which is excellent in moldability and long-term stable film-removability independent of the film drying temperature, and further relates to a surface-lubricated metal product also excellent in continuous moldability.

### BACKGROUND ART

In working, such as press-molding, of a metal sheet, a lubricating oil or the like has been coated so as to protect the metal surface and the metal mold surface from scratching due to poor lubrication. However, coating a lubricating oil gives rise to a cumbersome production process and splashing of the lubricating oil worsens the working environment. Furthermore, in a degreasing step after press molding, the lubricating oil is removed using an organic halogen-base solvent such as fluorocarbon, trichloroethane and dichloromethane, however, not only do these solvents adversely affect the health of workers but also the majority thereof are substances having an extremely high impact on the environment. The use of many of these solvents are will be discontinued, under the Montreal Protocol, in view of the protection of ozone layer. In order to avoid use of these solvents, a substitute method is required. Attempts are being made to dispense with degreasing by using a volatile lubricating oil or to perform the degreasing using an organic solvent. However, the volatile lubricating oil cannot give sufficiently high moldability under severe press molding and, when an organic solvent is used, problems arise in the safety and this is not a useful measure.

Also, a non-removing-type lubricating film, giving excellent moldability, corrosion resistance and solvent resistance without using a lubricating oil or a solvent for removing, has been developed. However, the lubricating film remains on the metal surface after the press molding and therefore, this technique cannot be used when the final product is required to have gloss or a texture on the metal surface or when the worked product passes through a welding step. To solve this problem, a removing-type lubricating film which can be dissolved and removed at the alkali degreasing step after press molding has been developed. This alkali removing-type lubricating film is suitably used where a glossy metal surface must be made good use of or a welding property is required after working. Japanese Unexamined Patent Publication (Kokai) Nos. 8-156177, 8-252887, 10-114014 and 10-88364 have proposed an alkali removing-type lubricating film using an acrylic resin.

However, this alkali removing-type lubricating film using an acrylic resin sometimes fails in ensuring sufficiently high moldability, for example, galling occurs under severe press molding conditions such as deep drawing and ironing (press working with a minus clearance). Japanese Unexamined Patent Publication (Kokai) Nos. 2000-160096 and 2000-309747 have proposed an alkali removing-type lubricating film using a urethane-base resin having a specific composition. However, in the case where long-term stable film-removability is required, this alkali-soluble lubricating film using an alkali-soluble polyurethane aqueous composition has a problem in that, for example, the film-removability with an alkali deteriorates in time or, when the drying temperature of the lubricating film becomes high, the film-removability deteriorates. In addition, for example, this lubricating film disadvantageously changes in alkali removability depending on the dry condition of the coating line.

Furthermore, in the case of performing continuous press molding without coating a lubricating oil, when molding under severe conditions, such as ironing, is continuously performed, unless the elastic modulus of the lubricating film coated on a metal is sufficiently large, the lubricating film is damaged due to pressure from the metal mold, and the metal mold and the surface of a metal to be worked adhere to induce mold galling. As a result, the lubricating film peeled off at the galled part attaches to the metal mold or molding failure such as impairment of the appearance of the metal surface is caused and these are serious problems in working.

One representative example of the metal product obtained through press molding is a metal-made fuel tank for automobiles. This fuel tank has a complicated shape, in many cases, and the molding material for fuel tanks is required to exhibit excellent moldability even under severe press molding conditions, such as deep drawing or ironing. As a substrate metal for fuel tanks, which can satisfy the severe requirement for corrosion hole resistance, a stainless steel sheet is known. The stainless steel sheet has both excellent corrosion resistance and good weldability and if this can be worked into a required tank shape, the stainless steel sheet can be an excellent substrate metal for fuel tanks. However, the workability of the stainless steel sheet is disadvantageously not capable of coping with the complicated shape of fuel tank in many cases.

An object of the present invention is to solve these problems and provide a surface-lubricated metal product having coated on both surfaces or one surface thereof an alkali-soluble lubricating film, which is excellent in the moldability and long-term stable film-removability independent of the film drying temperature. Another object of the present invention is to provide an alkali-soluble-film surface-lubricated metal product excellent also in continuous moldability. Still another object of the present invention is to provide a soluble surface-lubricated stainless steel sheet with excellent moldability for fuel tanks, in which an alkali-soluble lubricating film is coated on both surfaces or one surface, and also provide a production method of a fuel tank.

### DISCLOSURE OF THE INVENTION

The present inventors have made extensive investigations to solve these problems and to obtain a surface-lubricated metal product excellent in moldability and long-term stable film-removability independent of film drying temperature and, as a result, it has been found that the above-described objects can be attained when both surfaces or one surface of a metal is coated with an alkali-soluble lubricating film mainly comprising a lubricating function-imparting agent and an alkali-soluble polyurethane aqueous composition composed of a polyether polyol and having a carboxyl group within the molecule. The present invention has been accomplished based on this finding.

More specifically, the alkali-soluble-film surface-lubricated metal product excellent in moldability and long-term stable film-removability independent of film drying temperature according to the present invention is. characterized in that:
(1) an alkali-soluble lubricating film mainly comprising (A) an alkali-soluble polyurethane aqueous composition containing a polyether polyol as a skeleton and containing a carboxyl group within the molecule and (B) a lubricating function-imparting agent in an amount of 1 to 30 mass% based on the alkali-soluble polyurethane aqueous composition is coated on both surfaces or one surface of a metal such that the elastic modulus of the alkali-soluble lubricating film after coating is from 0.5 to 20 GPa at 25°C and the film thickness is 0.5 to 10 µm. By the coating with this alkali-soluble lubricating film, satisfactory moldability can be exerted even in press molding under severe conditions, such as deep drawing and ironing, and a metal product capable of exhibiting long-term stable film-removability independently of the film drying temperature can be obtained.
(2) The alkali-soluble-film surface-lubricated metal product according to the present invention is characterized in that the alkali-soluble lubricating film is an alkali-soluble lubricating film mainly comprising
   (A) the alkali-soluble polyurethane aqueous composition,
   (B) a lubricating function-imparting agent in an amount of 1 to 30 mass% based on the alkali-soluble polyurethane aqueous composition and (C) silica particles in an amount of 1 to 30 mass% based on the alkali soluble polyurethane aqueous composition and coated on both surfaces or one surface of a metal such that the elastic modulus of the alkali-soluble lubricating film after coating is from 0.5 to 20 GPa at 25°C and the film thickness is 0.5 to 10 µm. By adding the silica particles within the above-described range, the adhesive property between the alkali-soluble lubricating film and the metal product surface is improved and the film strength of the alkali-soluble lubricating film is elevated, so that galling resistance is enhanced.
(3) The alkali-soluble-film surface-lubricated metal product according to the present invention is characterized in that the glass transition temperature of the alkali-soluble polyurethane aqueous composition (A) is 120°C or more. In press molding under the servere conditions of continuously performing deep drawing or ironing without using a lubricating oil, the steel sheet surface sometimes reaches a temperature of 100°C or more due to frictional heat during working. However, the glass transition temperature of the alkali-soluble polyurethane aqueous composition which forms a continuous phase in the lubricating film is 120°C or more and therefore, even when the steel sheet surface reaches a temperature of 100°C or more, the film does not decrease in elastic modulus and exhibits excellent galling resistance.
(4) The alkali-soluble-film surface-lubricated metal product according to the present invention is characterized in that the amount of the carboxyl group contained in the alkali-soluble polyurethane aqueous composition constituting the alkali-soluble lubricating film is from 30 to 180 mg KOH/g in terms of the acid value. By the introduction of a carboxyl group into the polyurethane molecule to have an acid value of 30 to 180 mg KOH/g, the coated film can have flexibility capable of following molding even under severe molding conditions, despite the fact that the film after coating on a metal has a relatively high elastic modulus of 0.5 to 20 GPa at 25°C.
(5) The alkali-soluble-film surface-lubricated metal product according to the present invention is characterized in that the neutralizer for the carboxyl group contained in the alkali-soluble polyurethane aqueous composition (A) constituting the alkali-soluble lubricating film is sodium hydroxide or potassium hydroxide. The neutralizer for the carboxyl group is sodium hydroxide or potassium hydroxide, whereby the alkali solubility required in the present invention can be achieved.
(6) The alkali-soluble-film surface-lubricated metal product according to the present invention is characterized in that the alkali-soluble polyurethane aqueous composition (A) constituting the alkali-soluble lubricating film has a hydroxyl group within the molecule. The alkali-soluble polyurethane aqueous composition (A) has a hydroxyl group within the molecule, whereby the alkali solubility required in the present invention can be achieved even at a temperature such as room temperature.
(7) The alkali-soluble-film surface-lubricated metal product according to the present invention is characterized in that the lubricating function-imparting agent (B) constituting the alkali-soluble lubricating film comprises one or more member selected from the group consisting of a polyolefin-base wax, a paraffin-base wax, a stearic acid-base solid lubricant and a wax comprising a fluorine-containing resin. By the addition of this lubricating function-imparting agent, the lubricating film can have a low dynamic coefficient of friction over a wide temperature range and can have a good lubricating function.
(8) The alkali-soluble-film surface-lubricated metal product according to the present invention is characterized in that the flow initiating temperature of the alkali-soluble polyurethane aqueous composition constituting the alkali-soluble lubricating film is 170°C or more. By coating with this alkali-soluble lubricating film having a high flow initiating temperature, a metal product capable of exhibiting satisfactory continuous moldability even in press molding under severe conditions, such as deep drawing or ironing, can be obtained.
(9) The alkali-soluble-film surface-lubricated stainless steel sheet with excellent moldability for fuel tanks according to the present invention is characterized in that the substrate metal is any one member selected from an austenite-type stainless steel sheet, a ferrite-type stainless steel sheet and a two-phase-type stainless steel sheet and the alkali-soluble lubricating film coated satisfies any one feature of (1) to (8) above. The stainless steel sheet used as the substrate metal has both excellent corrosion resistance and good weldability and can be used as a substrate metal sheet for fuel tanks having excellent corrosion hole resistance and good weldability.
(10) The alkali-soluble-film surface-lubricated stainless steel sheet with excellent moldability for fuel tanks according to the present invention is characterized in that the substrate metal is an austenite-type stainless steel sheet comprising, in % by mass, C: 0.5% or less, Si: 5% or less, Mn: 15% or less, P: 0.1% or less, S: 0.05% or less, Ni: 6 to 20%, Cr: 15 to 30%, N: 0.5% or less and Al: 0.001 to 5%, with the balance of Fe and inevitable impurities. By taking account of performance as the substrate metal for fuel tanks, such as corrosion resistance and workability, and the production cost, the above-described components of the austenite-type stainless steel sheet each preferably satisfies the above-described range.
(11) The alkali-soluble-film surface-lubricated stainless steel sheet with excellent moldability for fuel tanks according to the present invention is characterized in that the substrate metal is a ferrite-type stainless steel sheet comprising, in % by mass, C: 0.5% or less, Si: 3% or less, Mn: 5% or less, P: 0.1% or less, S: 0.05% or less, Ni: 5% or less, Cr: 9 to 30%, N: 0.2% or less and Al: 0.001 to 5%, with the balance of Fe and inevitable impurities. By taking account of performance as the substrate metal for fuel tanks, such as corrosion resistance and workability, and the production cost, the above-described components of the ferrite-type stainless steel sheet each preferably satisfies the above-described range.
(12) The alkali-soluble-film surface-lubricated stainless steel sheet with excellent moldability for fuel tanks according to the present invention is characterized in that the substrate metal is a two phase-type stainless steel sheet comprising, in % by mass, C: 0.5% or less, Si: 5% or less, Mn: 15% or less, P: 0.1% or less, S: 0.05% or less, Ni: 2 to 20%, Cr: 12 to 30%, N: 0.5% or less and Al: 0.001 to 5%, with the balance of Fe and inevitable impurities. By taking account of performance as the substrate metal for fuel tanks, such as corrosion resistance and workability, and the production cost, the above-described components of the two phase-type stainless steel sheet each preferably satisfies the above-described range.
(13) The alkali-soluble-film surface-lubricated stainless steel sheet with excellent moldability for fuel tanks according to the present invention is characterized in that any one stainless steel sheet selected from those austenite-type stainless steel sheet, ferrite-type stainless steel sheet and two phase-type stainless steel further comprises one or more member of, in % by mass, Mo: 0.01 to 8%, Cu: 0.01 to 5%, Ti: 0.01 to 1%, Nb: 0.01 to 1%, V: 0.01 to 1%, Mg: 0.001 to 0.1%, Ca: 0.001 to 0.1%, B: 0.0005 to 0.05% and W: 0.01 to 5%.

### BRIEF DESCRIPTION OF THE DRAWINGS

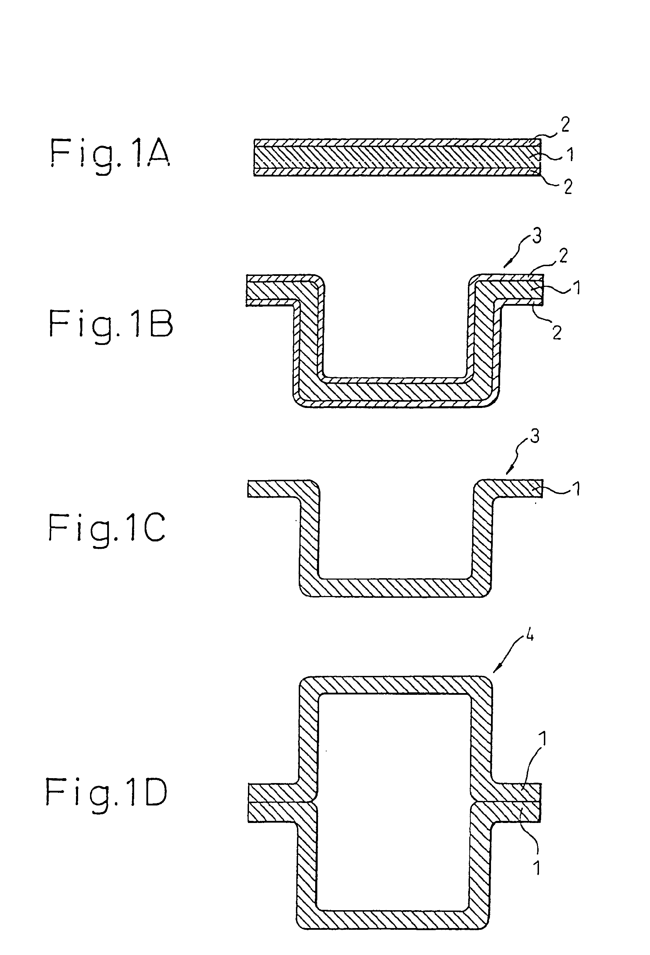

Fig. 1 is a view showing the process of producing a fuel tank from the stainless steel sheet according to the present invention. In Fig. 1, 1 is a stainless steel sheet, 2 is a soluble lubricating film, 3 is a molded article and 4 is a fuel tank.

### MODE FOR CARRYING OUT THE INVENTION

The present invention is described in detail below.

The alkali-soluble polyurethane aqueous composition for use in the present invention can be obtained by reacting a compound having at least two isocyanate groups per molecule, a compound having at least two active hydrogen groups per molecule and a compound having at least one or more active hydrogen group within the molecule and containing a carboxyl group, and dissolving or dispersing the reactant in water.

Examples of the compound having at least two isocyanate groups per molecule for use in the present invention include aliphatic diisocyanates such as trimethylene diisocyanate (TDI), tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate and 2,6-diisocyanatomethyl caproate; alicyclic diisocyanates such as 1,3-cyclopentane diisocyanate, 1,4-cyclohexane diisocyanate, 1,3-cyclohexane diisocyanate, 3-isocyanatomethyl-3,5,5-trimethylcyclohexyl isocyanate (IPDI), 4,4'-methylenebis(cyclohexylisocyanate), methyl-2,4-cyclohexane diisocyanate, methyl-2,6-cyclohexane diisocyanate, 1,4-bis(isocyanatomethyl)cyclohexane, 1,3-bis(isocyanatomethyl)cyclohexane (H₆XDI) and norbornene diisocyanate; aromatic diisocyanates such as m-phenylene diisocyanate, p-phenylene diisocyanate, 4,4'-diphenyl diisocyanate, 1,5-naphthalene diisocyanate, 4,4'-diphenylmethane diisocyanate, 2,4- or 2,6-tolylene diisocyanate or a mixture thereof, 4,4'-toluidine diisocyanate, dianisidine diisocyanate and 4,4'-diphenylether diisocyanate; and aroma-aliphatic diisocyanates such as 1,3- or 1,4-xylylene diisocyanate or a mixture thereof, ω,ω'-diisocyanato-1,4-diethylbenzene, and 1,3- or 1,4-bis(1-isocyanato-1-methylethyl)benzene (1,3- or 1,4-TMXDI) or a mixture thereof. These various isocyanate group-containing compounds may be used, but for obtaining satisfactory workability, an aromatic, aroma-aliphatic or alicyclic isocyanate compound is preferably used and reacted. In particular, TDI, IPDI, H₆XDI, 1,3-TMXDI or a mixture of two or more thereof is preferred.

In order to achieve long-term stable film-removability independent of film drying temperature, a polyether polyol is used as the polyether-base compound having at least two active hydrogen groups per molecule, which is reacted with the above-described isocyanate compound. The polyether polyol is described below.

The active hydrogen group of the polyether polyol is preferably a hydroxyl group and from the standpoint of keeping good mechanical properties of film, the number of active hydrogen groups is preferably from 2 to 6, more preferably from 2 to 4. Furthermore, in view of the urethane bond concentration having an effect on the final film performance and the workability in production, the molecular weight of the polyether polyol is preferably 200 to 10,000, more preferably from 300 to 5,000.

Specific examples of the polyether polyol where the active hydrogen group is a hydroxyl group include homopolymers and copolymers of alkylene oxide. Examples of the homopolymer include polyoxyethylene glycol, polyoxypropylene glycol, polyoxybutylene glycol and polytetramethylene ether glycol. Examples of the copolymer include a copolymer of propylene oxide and ethylene oxide, a copolymer of propylene oxide and butylene oxide, a copolymer of ethylene oxide and butylene oxide, a copolymer of tetrahydrofuran and 3-methyltetrahydrofuran, and a copolymer of tetrahydrofuran and propylene oxide. Among these, for obtaining the physical properties required so as to achieve satisfactory workability, polytetramethylene ether glycol is preferred.

In addition to the above-described polyol, for the purpose of adjusting the urethane group concentration and thereby optimizing the film property, a low molecular weight polyol having a molecular weight of 62 to 200 may be mixed.

Specific examples of the low molecular weight polyol include glycols such as ethylene glycol, propylene glycol, 1,3-propanediol, 1,4-butanediol, 1,5-pentanediol, 1,6-hexanediol, 1,9-nonanediol, 1,8-nonanediol, neopentyl glycol, 2-methylpentanediol, 3-methylpentanediol, 3,3-dimethylolheptane, 2,2,4-trimethyl-1,3-pentanediol, 2,4-diethyl-1,5-pentanediol, diethylene glycol, dipropylene glycol, 1,4-cyclohexanediol and 1,4-cyclohexanedimethanol; and compounds such as glycerin, trimethylolpropane and pentaerythritol.

Examples of the compound having at least one or more active hydrogen group within the molecule and containing a carboxyl group include carboxyl group-containing compounds, such as 2,2-dimethylolpropionic acid, 2,2-dimethylolbutyric acid, 2,2-dimethylolvaleric acid, dioxymaleic acid, 2,6-dioxybenzoic acid and 3,4-diaminobenzoic acid, derivatives thereof and polyester polyols obtained by copolymerizing these compounds or derivatives; and carboxyl group-containing compounds obtained by reacting a compound having an anhydride group such as maleic anhydride, phthalic anhydride, succinic anhydride, trimellitic anhydride and pyromellitic anhydride with a compound having an active hydrogen group, and derivatives thereof.

A carboxyl group may be introduced into the alkali-soluble polyurethane aqueous composition by copolymerizing at least one or more of the above-described carboxy group-containing compounds at the production of the polyurethane prepolymer or reacting it at the chain elongation reaction. The carboxyl group is introduced into the polyurethane molecule to have an acid value of 30 to 180 mg KOH/g, whereby despite the high elastic modulus of 0.5 to 20 GPa after coating on a metal surface and flexibility capable of following the molding even under severe molding conditions is imparted to the film.

In order to successfully dissolve or disperse the alkali-soluble polyurethane aqueous composition in water, a large number of carboxyl groups in the polyurethane aqueous composition must be neutralized. Examples of the neutralizer which can be used include primary amines such as ammonia, methylamine, ethylamine, n-propylamine and n-butylamine, secondary amines such as dimethylamine, diethylamine and diisopropylamine, tertiary amines such as trimethylamine, triethylamine, triethanolamine, triisopropanolamine and dimethylethanolamine, and alkali metal hydroxides such as sodium hydroxide and potassium hydroxide. These neutralizers may be used individually or in a combination of two or more thereof.

The neutralizer may be added directly to the polyurethane prepolymer or added to water when the prepolymer is dissolved or dispersed in the water. The amount of the neutralizer added is preferably from 0.1 to 2.0 equivalent, more preferably from 0.3 to 1.3 equivalent, to the carboxyl group. Among these neutralizers, for achieving good alkali solubility required in the present invention, sodium hydroxide and potassium hydroxide are preferred.

In order to more successfully dissolve or disperse the alkali-soluble polyurethane aqueous composition in water, a surfactant or the like may be used.

In synthesizing the above-described polyurethane prepolymer, an organic solvent may also be used. In the case of using an organic solvent, specific examples thereof include acetone, methyl ethyl ketone, ethyl acetate, acetonitrile and N-methylpyrrolidone. The amount of the organic solvent is preferably on the order of 3 to 50 mass% based on the reaction raw materials.

The polyurethane prepolymer is dissolved or dispersed in water using a homogenizer, a mixer or the like. At this time, the temperature is preferably on the order of 5 to 70°C so as to prevent evaporation of the basic substance neutralizing the carboxyl group and ensure workability. Furthermore, at the dispersion in a medium such as water, the concentration of the polyurethane aqueous composition is preferably from 10 to 50 mass% so as to not excessively increase the viscosity and to maintain the storage stability.

Also, another chain elongating agent may be further reacted to give a high molecular weight. As the chain elongating agent, for example, known polyamine compounds are used. Examples of the polyamine compound include diamines such as ethylenediamine, 1,2-propanediamine, 1,6-hexamethylenediamine, piperazine, 2,5-dimethylpiperazine, isophoronediamine, 4,4'-dicyclohexylmethanediamine, 3,3'-dimethyl-4,4'-dicyclohexylmethanediamine and 1,4-cyclohexanediamine; polyamines such as diethylenetriamine, dipropylenetriamine, triethylenetetramine and tetraethylenepentamine; compounds having an amino group and a hydroxyl group, such as hydroxyethylhydrazine, hydroxyethyldiethylenetriamine, 2-[(2-aminoethyl)amino]ethanol and 3-aminopropanediol; hydrazines; and acid hydrazides. These polyamine compounds can be used individually or as a mixture of two or more thereof. Among these chain elongating agents, in order to achieve good alkali solubility at low temperatures such as room temperature, which is required in the present invention, a chain elongation reaction is preferably performed by using a compound having an amino group and a hydroxyl group so that a hydroxyl group is contained within the molecule.

In the alkali-soluble polyurethane aqueous composition of the present invention, a film forming aid, a leveling agent, a defoaming agent and a weather resistance stabilizer may be added, if desired.

The film of the alkali-soluble polyurethane aqueous composition of the present invention is most efficiently solubilized and removed by alkali degreasing but may also be removed by using warm water or a solvent.

The lubricating function-imparting agent for use in the present invention has a function of reducing the coefficient of friction on the film surface and thereby further imparting lubricity to prevent mold galling or the like and improve the press workability and drawing workability. The lubricating function-imparting agent for use in the present invention is not particularly limited as long as it is a particle mainly comprising (a) a solid lubricant or wax comprising a long-chain aliphatic hydrocarbon and having no polar group, (b) a solid lubricant or wax having a long-chain aliphatic hydrocarbon group (long-chain alkyl group) and a polar group within one molecule or (c) a solid lubricant or wax comprising a fluorine-containing resin and it can be stably and uniformly dispersed in an aqueous treating solution. Preferred examples of the lubricating function-imparting agent include those comprising a polyolefin-base wax with the hydrocarbon group having from 125 to 700 carbons, such as polyethylene and polypropylene, or a paraffin with the hydrocarbon group having from 32 to 72 carbons (microwax) as the solid lubricant or wax (a), a stearic acid-base solid lubricant as the solid lubricant or wax (b), or polytetrafluoroethylene, polychlorotrifluoroethylene, polyvinylidene fluoride, polyvinyl fluoride or the like as the solid lubricant or wax (c), and those obtained by mixing or modifying one or more of these solid lubricants or waxes (a), (b) and (c).

Examples of the solid lubricant or wax (b) include a higher aliphatic alcohol with the hydrocarbon group "having from 12 to 22 carbons, such as cetyl alcohol and stearyl alcohol; a higher fatty acid with the hydrocarbon group having from 13 to 17 carbons, such as stearic acid and 12-hydroxystearic acid; a metal soap comprising a divalent metal and a higher fatty acid with the hydrocarbon group having from 12 to 30 carbons, such as lead stearate, zinc stearate and calcium stearate; as the ester type, an ester of a higher fatty acid with the hydrocarbon group having from 13 to 17 carbons and another hydrocarbon, an ester of a higher aliphatic alcohol with the hydrocarbon group having from 13 to 17 carbons and an aliphatic dicarboxylic acid or a fatty acid, and an ester of a polyhydric alcohol and a higher fatty acid, such as glycerin tristearate and trimethylolpropane tristearate; as the fatty acid amide type, a monoamide or a bisamide of a higher fatty acid with the hydrocarbon group having from 15 to 17 carbons, such as palmitic acid amide, stearic acid amide, oleic acid amide, ethylene bisstearoamide and methylene bisstearoamide; and as the waxes, a higher fatty acid wax with the hydrocarbon group having from 27 to 34 carbons, a wax comprising an ester of a higher fatty acid with the hydrocarbon group having from 27 to 34 carbons and an aliphatic diol, and a polar polyethylene wax with the hydrocarbon group having from 125 to 700 carbons, such as wax where a carboxyl group is bonded at the terminal of polyethylene chain and an acid radical such as hydroxyl group is bonded to some places of the chain.

The average particle size of the particulate lubricating function-imparting agent for use in the present invention is preferably 10 µm or less. If the average particle size exceeds 10 µm, not only the film loses continuity and uniformity to decrease the adhesion of lubricating film to the substrate steel sheet or the adhesion of the coating material and generate the separation of lubricating function-imparting agent but also the storage stability as a coating material composition decreases. The average particle size of the lubricating function-imparting agent is more preferably from 0.5 to 6 µm. The "average particle size" as used herein means "d50 (50% average particle size)" obtained by plotting a relational curve between the particle size and the cumulative volume ratio and reading the particle size when the cumulative volume ratio is 50%. At this time, the measurement is performed as follows. Laser light is irradiated in the state where particles are dispersed in a solvent, and the interference fringes generated are analyzed to determine d50 or the particle size distribution. Suitable examples of the measuring device include a SALD manufactured by Shimadzu Corporation, a CILAS manufactured by CILAS, and an LA manufactured by Horiba Seisakusho.

The amount of the lubricating function-imparting agent added is, in terms of the solid content of the lubricating function-imparting agent, from 1 to 30 mass%, preferably from 5 to 20 mass%, based on the solid content of the polyurethane aqueous composition. If the amount added is less than 1%, the required lubricating effect cannot be obtained, whereas if it exceeds 30 mass%, problems arise, for example, the film strength decreases or the lubrication-imparting agent is desorbed.

In the case of improving the film strength or the adhesion to the substrate surface, silica is added. The silica particle may be any silica particle such as water-dispersible colloidal silica, ground silica and vapor phase silica. On taking account of the workability of film and the corrosion resistance, the primary particle size is preferably from 2 to 30 nm and the secondary aggregated particle size is preferably 100 nm or less. The amount of silica added is preferably from 1 to 30 mass% based on the solid content of the alkali-soluble polyurethane aqueous composition. If the amount added is less than 1%, a sufficiently high effect of improving the corrosion resistance is not obtained and a sufficiently strong adhesion to the underlying layer is also not obtained. If the amount of silica added exceeds 30%, the film elongation decreases and this causes reduction of workability to readily generate galling.

In addition to those components (A), (B) and (C), the lubricating film coated on the surface-lubricated metal product of the present invention may contain, if desired, a pigment for imparting design property, an electrically conducting additive for imparting electrical conductivity, a thickening agent, a defoaming agent, a dispersant, a desiccating agent, a stabilizer, an anti-skinning agent, an antifungal, an antiseptic, an antifreezing agent and the like, according to purpose, within the range of not deteriorating the properties of the film.

In the present invention, the elastic modulus of the alkali-soluble lubricating film formed on a metal surface is, as the elastic modulus at 25°C after coating, from 0.5 to 20 GPa, preferably from 1.0 to 10 GPa. If this elastic modulus is less than 0.5 GPa, the film is readily damaged in press molding under severe conditions, such as deep drawing or ironing, and satisfactory moldability cannot be exerted, whereas if it exceeds 20 GPa, the film cannot maintain the flexibility capable of following the molding under severe molding conditions. The "elastic modulus after coating" as used herein means a Young's modulus determined by using an ultrafine hardness testing machine "FISHER SCOPE H-100" manufactured by Fisher Instrument Co. A Vickers quadrangular pyramid-shaped diamond indenter is used and, to eliminate the effect of the metal surface by far harder than the film, the maximum penetration depth of the indenter is set to 1/2 or less of the film thickness.

In the present invention, the glass transition temperature of the alkali-soluble polyurethane aqueous composition (A) in the alkali-soluble lubricating film formed on a metal surface is preferably 120°C or more. Under severe press molding conditions where deep drawing or ironing is continuously performing without using a lubricating oil, a steel sheet surface sometimes reaches a temperature of 100°C or more, due to frictional heat, during working. In such a case, if the glass transition temperature of the alkali-soluble polyurethane aqueous composition (A) constituting the continuous phase in the lubricating film is less than 120°C, the elastic modulus of the lubricating film decreases to induce mold galling and the lubricating film peeled at the galled part adheres to the metal mold or molding failures such as impairment of appearance on the metal surface are caused. The "glass transition temperature" as used herein means a temperature at the peak of tan δ when the dynamic viscoelasticity is measured by a dynamic viscoelasticity measuring device using forced vibration non-resonance under conditions that the exciting frequency is 10 Hz, the temperature-rising rate is 5.0°C/min, the sample length is 5 cm and the amplitude is 0.01 mm.

The thickness of the lubricating film coated on the surface-lubricated metal product of the present invention is from 0.5 to 10 µm. If the thickness is less than 0.5 µm, the film pressed at the working cannot prevent damage reaching the plating layer and, in addition, due to sliding, the required workability cannot be obtained. If the thickness exceeds 10 µm, peeled film dust increases at the molding and this requires frequent cleaning of the metal mold, giving rise to a reduction in the productivity. The lubricating resin film of the present invention is coated on both front and back surfaces or one surface of a metal according to the purpose.

The lubricating film coated on the surface-lubricated metal product of the present invention can be formed by coating the film using a conventionally known method such as roll coater coating method and spray method, and bake-drying it.

In the present invention, to obtain higher corrosion resistance and a better adhesive property, the substrate may be subjected to a phosphate treatment or a chromate treatment. The chromate treatment may be any of an electrolysis-type chromate treatment, a reaction-type chromate treatment and a coating-type chromate treatment. The chromate film is preferably a film formed by coating a chromate solution comprising a partially reduced chromic acid and one or more member selected from silica, phosphoric acid and hydrophilic resin, and drying the solution.

In the phosphate treatment, the amount of phosphate attached is preferably from 0.5 to 3.5 g/m² as phosphate. In the chromate treatment, the amount of chromate attached is, in terms of metal chromium, preferably from 5 to 150 mg/m², more preferably from 10 to 50 mg/m². If the amount attached is less than 5 mg/m², an effect of giving excellent corrosion resistance cannot be obtained, whereas if it exceeds 150 mg/m², the chromate film undergoes cohesion failure at the molding and the workability decreases. According to the purpose, the substrate may be further subjected to an acid washing treatment, an alkali treatment, an electrolytic reduction treatment, a cobalt plating treatment, a nickel plating treatment, a silane coupling agent treatment or an inorganic silicate treatment.

In the metal product having formed thereon a lubricating film of the present invention, a lubricating oil or a lubricating rust-preventive oil may be further coated on the film. However, the lubricating oil or lubricating rust-preventive oil is preferably a lubricating oil or lubricating rust-preventive oil which does not swell or dissolve the lubricating film of the present invention.

In the present invention, the metal used is not particularly limited and examples of the metal which can be used include aluminum, titanium, zinc, copper, nickel, an alloy containing such a metal, and steel. In the case of using a steel, the components are not particularly limited and either a common steel or a chromium-containing steel such as stainless steel may be used. The shape of the steel product is also not limited and a steel sheet such as cold-rolled steel sheet and hot-rolled steel sheet, a steel tube, a steel wire or the like can be used.

A coated plating layer may be present on the surface of a steel and the kind thereof is not limited but examples of the plating layer which can be used include a zinc-base plating layer such as zinc plating, zinc-nickel plating, zinc-iron plating, zinc-chromium plating, zinc-aluminum plating, zinc-titanium plating, zinc-magnesium plating and zinc-manganese plating, an aluminum or aluminum alloy plating layer, a lead or lead alloy plating layer, a tin or tin alloy plating layer, and these plating layers where a small amount of one or more heteroelement such as cobalt, molybdenum, tungsten, nickel, titanium, chromium, aluminum, manganese, iron, magnesium, lead, antimony, tin, copper, cadmium and arsenic is contained or an inorganic material such as silica, alumina and titania is dispersed.

The present invention can also be applied to a multilayer plating layer comprising a combination of the above-described plating and another kind of plating such as iron plating and iron-phosphorus plating. The plating method is not particularly limited and electroplating, hot dipping, vapor deposition plating and the like can be used. In the case of a steel sheet, the treatment after plating includes, for example, a zero spangling treatment which is an appearance uniformalizing treatment after hot dipping, an annealing treatment which is a treatment for reforming the plating layer, and a temper-rolling for adjusting the surface state or material quality, however, in the present invention, the after-treatment is not particularly limited and any of these treatments can be applied.

In the alkali-soluble-film surface-lubricated stainless steel sheet with excellent moldability for fuel tanks according to the present invention, the austenite-type stainless steel sheet used as the substrate metal preferably comprises, in % by mass, C: 0.5% or less, Si: 5% or less, Mn: 15% or less, P: 0.1% or less, S: 0.05% or less, Ni: 6 to 20%, Cr: 15 to 30%, N: 0.5% or less and Al: 0.001 to 5%, with the balance of Fe and inevitable impurities. By satisfying this requirement, the performance as the tank material, such as corrosion resistance and workability, and the production cost, can be satisfied.

In the alkali-soluble-film surface-lubricated stainless steel sheet with excellent moldability for fuel tanks according to the present invention, the ferrite-type stainless steel sheet used as the substrate metal preferably comprises, in % by mass, C: 0.5% or less, Si: 3% or less, Mn: 5% or less, P: 0.1% or less, S: 0.05% or less, Ni: 5% or less, Cr: 9 to 30%, N: 0.2% or less and Al: 0.001 to 5%, with the balance of Fe and inevitable impurities. By satisfying this requirement, the performance as the tank material, such as corrosion resistance and processability, and the production cost, can be satisfied.

In the alkali-soluble-film surface-lubricated stainless steel sheet with excellent moldability for fuel tanks according to the present invention, the two phase-type stainless steel sheet used as the substrate metal preferably comprises, in % by mass, C: 0.5% or less, Si: 5% or less, Mn: 15% or less, P: 0.1% or less, S: 0.05% or less, Ni: 2 to 20%, Cr: 12 to 30%, N: 0.5% or less and Al: 0.001 to 5%, with the balance of Fe and inevitable impurities. By satisfying this requirement, the performance as the tank material, such as corrosion resistance and processability, and the production cost, can be satisfied.

In the alkali-soluble-film surface-lubricated stainless steel sheet with excellent moldability for fuel tanks according to the present invention, the stainless steel sheet, which is any one of austenite-type stainless steel sheet, ferrite-type stainless steel sheet and two phase-type stainless steel sheet, may further contain one or more member of, in % by mass, Mo: 0.01 to 8%, Cu: 0.01 to 5%, Ti: 0.01 to 1%, Nb: 0.01 to 1%, V: 0.01 to 1%, Mg: 0.001 to 0.1%, Ca: 0.001 to 0.1%, B: 0.0005 to 0.05% and W: 0.01 to 5%.

The surface-lubricated metal product of the present invention contains a polyether polyol in the skeleton and therefore, despite excellent film performance such as durability, the degreasing/film-removing can be easily attained, if desired.

The degreasing operation is performed, for example, by spraying an alkali aqueous solution (degreasing solution) prepared to a pH of 9.0 to 12.0 and a liquid temperature of 25 to 60°C on the surface-lubricated metal product of the present invention, or by dipping the surface-lubricated metal produce in such a degreasing solution.

The soluble surface-lubricated stainless steel sheet coated with the alkali-soluble lubricating resin film of the present invention is subjected to molding such as press molding, deep drawing or ironing. Even when such severe working is performed, by virtue of excellent workability and lubricity of the alkali-soluble lubricating resin film of the present invention, satisfactory moldability can be obtained and the steel sheet surface can be protected from scratching or galling. After the soluble surface-lubricated stainless steel sheet coated with the alkali-soluble lubricating resin film of the present invention is molded, the lubricating resin film can be removed by a treatment with an alkali solution, hot water or a solvent. Furthermore, after the removal of soluble lubricating resin film, the stainless steel sheet of the present invention can be welded to produce a fuel tank. The alkali-soluble lubricating resin film of the present invention has good solubility and therefore, causes no adverse effect during the welding.

The production of a fuel tank obtained through the formation of a lubricating film of a soluble surface-lubricated stainless steel sheet coated with the alkali-soluble lubricating resin film of the present invention, the molding, the removal of lubricating resin film and the welding is described below by referring to Figs. 1A to 1D. The alkali-soluble lubricating resin film 2 of the present invention is coated on a stainless steel sheet 1 to prepare a soluble surface-lubricated stainless steel sheet (see, Fig. 1A). This stainless steel sheet coated with an alkali-soluble lubricating resin film is, for example, deep-drawn to obtain a molded article 3. This molded article comprises a stainless steel sheet 1 and a lubricating resin film 2 and scratches and galling are not observed on the steel sheet 1 (see, Fig. 1B). After the molding, the molded article 3 is treated with an alkali solution or hot water using a spray method or a dipping method to remove the lubricating resin film 2 (see, Fig. 1C). Thereafter, the molded articles 3 from which the lubricating film is removed are welded to produce a fuel tank 4 (Fig. 1D).

### EXAMPLES

The present invention is described in greater detail. below by referring to Examples and Comparative Examples, however, the present invention is not limited to these

### Examples.

### 1. Sample Metal Sheet

The following metal sheets were used as the metal sheet on which a lubricating film is coated.
(a) zinc electroplated steel sheet (thickness: 0.8 mm, plated amount: 20 g/m²)
(b) Zinc-nickel alloy electroplated steel sheet (thickness: 0.8 mm, plated amount: 20 g/m²)
(c) Zinc-iron alloy electroplated steel sheet (thickness: 0.8 mm, plated amount: 20 g/m²)
(d) Zinc hot-dipped steel sheet (thickness: 0.8 mm, plated amount: 150 g/m²)
(e) Zinc-iron alloy hot-dipped steel sheet (thickness: 0.8 mm, plated amount: 45 g/m²)
(f) Zinc-aluminum alloy hot-dipped steel sheet (thickness: 0.8 mm, plated amount: 150 g/m²)
(g) Aluminum-silicon alloy hot-dipped steel sheet (thickness: 0.8 mm, plated amount: 50 g/m²)
(h) Aluminum-silicon-magnesium alloy hot-dipped steel sheet (thickness: 0.8 mm, plated amount: 50 g/m²)
(i) Ferrite-type SUS430 stainless steel sheet (thickness: 0.8 mm, 2B finish)
   SUS430 used herein is a stainless steel sheet for use in normal home appliances or industrial kitchen equipment and differs from the stainless steel sheet (described later) having a specific component constitution, used as the substrate metal sheet of alkali-soluble-film surface-lubricated stainless steel sheet for fuel tanks. The chemical components of SUS430 are, in % by mass, C: 0.12% or less, Si: 0.75% or less, Mn: 1% or less, P: 0.04% or less, S: 0.03% or less and Cr: 16 to 18%. Ni, Mo and N are not contained.
(j) Cold-rolled steel sheet (thickness: 0.8 mm)
(k) Alkali-soluble-film surface-lubricated stainless steel sheet for fuel tanks

As the substrate metal sheet of the alkali-soluble-film surface-lubricated stainless steel sheet for fuel tanks of the present invention, the stainless steel sheets having a component constitution shown in Table 1 were used.

Out of these metal sheets, in the case of plated steel sheets (a) to (h), a coating-type chromate solution obtained by adding colloidal silica to chromic acid having a chromium reduction ratio of (Cr(VI)/entire Cr)=0.4 was coated by a roll coater to have a chromium attached amount of 20 mg/m² in terms of metal chromium, and dried under heating to form a chromate film. In the case of (i) SUS430 stainless steel sheet, (j) cold-rolled steel sheet and (k) alkali-soluble-film surface-lubricated stainless steel sheet for fuel tanks, the chromate treatment was not applied.

### 2. Polyurethane Aqueous Composition

The alkali-soluble polyurethane aqueous compositions used were prepared as follows.

### (Production Example 1)

In a four-neck flask equipped with a stirrer, a Dimroth condenser, a nitrogen inlet, a silica gel drying tube and a thermometer, 87.11 g of 3-isocyanatomethyl-3,5,5-trimethylcyclohexylisocyanate, 31.88 g of 1,3-bis(1-isocyanato-1-methylethyl)benzene, 41.66 g of dimethylolpropionic acid, 4.67 g of triethylene glycol, 62.17 g of polytetramethylene ether glycol having a molecular weight of 2,000, and 122.50 g of acetonitrile as a solvent were added and after elevating the temperature to 70°C, stirred for 6 hours in a nitrogen atmosphere. Then, it was confirmed that the amine equivalent reached a predetermined value. Thus, an acetonitrile solution of polyurethane prepolymer was obtained. Subsequently, 346.71 g of the obtained polyurethane prepolymer solution was dispersed using a homodisper in an aqueous solution containing 12.32 g of sodium hydroxide dissolved in 639.12 g of water, and thereby formed into an emulsion. In this polyurethane emulsion, 12.32 g of 2-[(2-aminoethyl)amino]ethanol diluted with 110.88 g of water was added to perform a chain elongation reaction. Thereafter, acetonitrile used in the synthesis of polyurethane prepolymer was removed by distillation at 50°C under reduced pressure of 150 mmHg. As a result, a polyurethane emulsion substantially free of a solvent and having an acid value of 69.0, a solid content concentration of 25 mass% and a viscosity of 30 mPa·s was obtained.

### (Production Example 2)

In a four-neck flask equipped with a stirrer, a Dimroth condenser, a nitrogen inlet, a silica gel drying tube and a thermometer, 90.98 g of 3-isocyanatomethyl-3,5,5-trimethylcyclohexylisocyanate, 33.30 g of 1,3-bis(1-isocyanato-1-methylethyl)benzene, 35.47 g of dimethylolpropionic acid, 9.38 g of triethylene glycol, 124.87 g of polytetramethylene ether glycol having a molecular weight of 2,000, and 126.00 g of acetonitrile as a solvent were added and after elevating the temperature to 70°C, stirred for 5 hours in a nitrogen atmosphere. Then, it was confirmed that the amine equivalent reached a predetermined value. Thus, an acetonitrile solution of polyurethane prepolymer was obtained. Subsequently, 396.76 g of the obtained polyurethane prepolymer solution was dispersed, using a homodisper (homogeneously dispersing apparatus), in an aqueous solution containing 10.00 g of sodium hydroxide dissolved in 589.57 g of water, and thereby formed into an emulsion. In this polyurethane emulsion, 12.27 g of 2-[(2-aminoethyl)amino]ethanol diluted with 110.43 g of water was added to perform a chain elongation reaction. Thereafter, acetonitrile used in the synthesis of polyurethane prepolymer was removed by distillation at 50°C under reduced pressure of 150 mmHg. As a result, a polyurethane emulsion substantially free of a solvent and having an acid value of 46.8 mg KOH/g, a solid content concentration of 30 mass% and a viscosity of 35 mPa·s was obtained.

### (Production Example 3)

In a four-neck flask equipped with a stirrer, a Dimroth condenser, a nitrogen inlet, a silica gel drying tube and a thermometer, 83.81 g of 3-isocyanatomethyl-3,5,5-trimethylcyclohexylisocyanate, 30.67 g of 1,3-bis(1-isocyanato-1-methylethyl)benzene, 29.38 g of dimethylolpropionic acid, 10.49 g of triethylene glycol, 139.65 g of polytetramethylene ether glycol having a molecular weight of 2,000, and 126.00 g of acetonitrile as a solvent were added and after elevating the temperature to 70°C, stirred for 6 hours in a nitrogen atmosphere. Then, it was confirmed that the amine equivalent reached a predetermined value. Thus, an acetonitrile solution of polyurethane prepolymer was obtained. Subsequently, 400.34 g of the obtained polyurethane prepolymer solution was dispersed using a homodisper in an aqueous solution containing 8.36 g of sodium hydroxide dissolved in 654.40 g of water, and thereby formed into an emulsion. In this polyurethane emulsion, 11.40 g of 2-[(2-aminoethyl)amino]ethanol diluted with 45.60 g of water was added to perform a chain elongation reaction. Thereafter, acetonitrile used in the synthesis of polyurethane prepolymer was removed by distillation at 50°C under reduced pressure of 150 mmHg. As a result, a polyurethane emulsion substantially free of a solvent and having an acid value of 39.1 mg KOH/g, a solid content concentration of 30 mass% and a viscosity of 25 mPa·s was obtained.

### (Production Example 4)

In a four-neck flask equipped with a stirrer, a Dimroth condenser, a nitrogen inlet, a silica gel drying tube and a thermometer, 61.40 g of 1,3-bis(isocyanatomethyl)cyclohexane, 77.28 g of 1,3-bis(1-isocyanato-1-methylethyl)benzene, 54.37 g of dimethylolpropionic acid, 6.09 g of triethylene glycol, 20.29 g of polytetramethylene ether glycol having a molecular weight of 1,000, 40.57 g of polytetramethylene ether glycol having a molecular weight of 2,000, and 140.00 g of acetonitrile as a solvent were added and after elevating the temperature to 70°C, stirred for 6 hours in a nitrogen atmosphere. Then, it was confirmed that the amine equivalent reached a predetermined value. Thus, an acetonitrile solution of polyurethane prepolymer was obtained. Subsequently, 373.49 g of the obtained polyurethane prepolymer solution was dispersed using a homodisper in an aqueous sodium hydroxide solution containing 15.15 g of sodium hydroxide dissolved in 581.68 g of water, and thereby formed into an emulsion. In this polyurethane emulsion, 12.08 g of 2-[(2-aminoethyl)amino]ethanol diluted with 48.32 g of water was added to perform a chain elongation reaction. Thereafter, acetonitrile used in the synthesis of polyurethane prepolymer was removed by distillation at 50°C under reduced pressure of 150 mmHg. As a result, a polyurethane emulsion substantially free of a solvent and having an acid value of 78.7 mg KOH/g, a solid content concentration of 30 mass% and a viscosity of 200 mPa•s was obtained.

### (Comparative Example 1)

In a four-neck flask equipped with a stirrer, a Dimroth condenser, a nitrogen inlet, a silica gel drying tube and a thermometer, 183.09 g of 3-isocyanatomethyl-3,5,5-trimethylcyclohexylisocyanate, 56.28 g of dimethylolpropionic acid, 12.62 g of triethylene glycol, 168.01 g of a polyester polyol made from adipic acid and ethylene glycol and having a molecular weight of 2,000, and 180.00 g of ethyl acetate as a solvent were added and after elevating the temperature to 70°C, stirred for 6 hours in a nitrogen atmosphere. Then, it was confirmed that the amine equivalent reached a predetermined value. Thus, an ethyl acetate solution of polyurethane prepolymer was obtained. Subsequently, 282.00 g of the obtained polyurethane prepolymer solution was dispersed. using a homodisper in an aqueous solution containing 7.90 g of sodium hydroxide dissolved in 403.96 g of water, and thereby formed into an emulsion. In this polyurethane emulsion, 9.56 g of 2-[(2-aminoethyl)amino]ethanol diluted with 86.04 g of water was added to perform a chain elongation reaction. Thereafter, ethyl acetate used in the synthesis of polyurethane prepolymer was removed by distillation at 50°C under reduced pressure of 150 mmHg. As a result, a polyurethane emulsion substantially free of a solvent and having an acid value of 51.5, a solid content concentration of 30 mass% and a viscosity of 100 mPa·s was obtained.

### (Comparative Example 2)

In a four-neck flask equipped with a stirrer, a Dimroth condenser, a nitrogen inlet, a silica gel drying tube and a thermometer, 83.93 g of 1,4-bis(isocyanatomethyl)cyclohexane, 14.89 g of dimethylolbutyric acid, 11.62 g of triethylene glycol, 309.56 g of polytetramethylene ether glycol having a molecular weight of 2,000, and 180.00 g of acetonitrile as a solvent were added and after elevating the temperature to 70°C, stirred for 7 hours in a nitrogen atmosphere. Then, it was confirmed that the amine equivalent reached a predetermined value. Thus, an acetonitrile solution of polyurethane prepolymer was obtained. Subsequently, 287.01 g of the obtained polyurethane prepolymer solution was dispersed using a homodisper in an aqueous triethylamine solution containing 4.86 g of triethylamine dissolved in 451.93 g of water, and thereby formed into an emulsion. In this polyurethane emulsion, 4.23 g of 2-[(2-aminoethyl)amino]ethanol diluted with 38.07 g of water was added to perform a chain elongation reaction. Thereafter, acetonitrile used in the synthesis of polyurethane prepolymer was removed by distillation at 50°C under reduced pressure of 150 mmHg. As a result, a polyurethane emulsion substantially free of a solvent and having an acid value of 12.9 mg KOH/g, a solid content concentration of 30 mass% and a viscosity of 50 mPa·s was obtained.

### (Comparative Example 3)

In a four-neck flask equipped with a stirrer, a Dimroth condenser, a nitrogen inlet, a silica gel drying tube and a thermometer, 90.98 g of 3-isocyanatomethyl-3,5,5-trimethylcyclohexylisocyanate, 33.30 g of 1,3-bis(1-isocyanato-1-methylethyl)benzene, 35.47 g of dimethylolpropionic acid, 9.38 g of triethylene glycol, 124.87 g of a polyester polyol made from adipic acid, neopentyl glycol and 1,6-hexanediol and having a molecular weight of 2,000, and 126.00 g of acetonitrile as a solvent were added and after elevating the temperature to 70°C, stirred for 5 hours in a nitrogen atmosphere. Then, it was confirmed that the amine equivalent reached a predetermined value. Thus, an acetonitrile solution of polyurethane prepolymer was obtained. Subsequently, 396.76 g of the obtained polyurethane prepolymer solution was dispersed, using a homodisper, in an aqueous solution containing 10.00 g of sodium hydroxide dissolved in 589.57 g of water, and thereby formed into an emulsion. In this polyurethane emulsion, 12.27 g of 2-[(2-aminoethyl)amino]ethanol diluted with 110.43 g of water was added to perform a chain elongation reaction. Thereafter, acetonitrile used in the synthesis of polyurethane prepolymer was removed by distillation at 50°C under reduced pressure of 150 mmHg. As a result, a polyurethane emulsion substantially free of a solvent and having an acid value of 46.8 mg KOH/g, a solid content concentration of 30 mass% and a viscosity of 50 mPa•s was obtained.

### (Comparative Example 4)

In a four-neck flask equipped with a stirrer, a Dimroth condenser, a nitrogen inlet, a silica gel drying tube and a thermometer, 20.35 g of 3-isocyanatomethyl-3,5,5-trimethylcyclohexylisocyanate, 67.03 g of 1,3-bis(1-isocyanato-1-methylethyl)benzene, 24.05 g of dimethylolbutyric acid, 238.58 g of a polyester polyol made from adipic acid, neopentyl glycol and 1,6-hexanediol and having a molecular weight of 2,000, and 150.00 g of acetone as a solvent were added and after elevating the temperature to 50°C, stirred for 7 hours in a nitrogen atmosphere. Then, it was confirmed that the amine equivalent reached a predetermined value. Thus, an acetone solution of polyurethane prepolymer was obtained.

Subsequently, 393.45 g of the obtained polyurethane prepolymer solution was dispersed using a homodisper in an aqueous triethanolamine solution containing 19.05 g of triethanolamine dissolved in 650.14 g of water, and thereby formed into an emulsion. In this polyurethane emulsion, 5.54 g of 2-[(2-aminoethyl)amino]ethanol diluted with 49.86 g of water was added to perform a chain elongation reaction. Thereafter, acetone used in the synthesis of polyurethane prepolymer was removed by distillation at 50°C under reduced pressure of 150 mmHg. As a result, a polyurethane emulsion substantially free of a solvent and having an acid value of 24.0 mg KOH/g, a solid content concentration of 30 mass% and a viscosity of 50 mPa·s was obtained.

### 3. Lubricating Function-Imparting Agent (wax or solid lubricant)

The following waxes or lubricants were used as the lubricating function-imparting agent.
- PE Wax A (low-density polyethylene wax, softening temperature: 110°C, average particle size: 4.0 µm, dispersed as an aqueous emulsion, solid content: 40 mass%)
- PE Wax B (low-density polyethylene wax, softening temperature: 110°C, average particle size: 1.0 µm, dispersed as an aqueous emulsion, solid content: 40 mass%)
- PE Wax C (low-density polyethylene wax, softening temperature: 110°C, average particle size: 2.5 µm, dispersed as an aqueous emulsion, solid content: 40 mass%)
- PTFE Wax A (polytetrafluoroethylene wax, average particle size: 0.8 µm, dispersed as an aqueous emulsion, solid content: 60 mass%)
- PTFE Wax B (polytetrafluoroethylene wax, average particle size: 3.5 µm, dispersed as an aqueous emulsion, solid content: 60 mass%)
- Paraffin wax (synthetic paraffin wax, melting point: 105°C, average particle size: 5.0 µm, dispersed as an aqueous emulsion, solid content: 33 mass%)
- Calcium stearate (average particle size: 2.0 µm, dispersed as an aqueous emulsion, solid content: 40 mass%)

### 4. Silica Particles

As the silica particles, colloidal silica having a particle size of 10 to 20 nm, a pH of 8.6 and a heating residue of about 20 mass% was added to have a content of 10 mass% in the film of alkali-soluble polyurethane aqueous composition. That is, 10 parts by weight as a solid content of colloidal silica was added per 100 parts by weight as a solid content of the emulsion of alkali-soluble polyurethane aqueous composition.

### 5. Production of Surface-Lubricated Metal Product

### (Example 1)

25 Parts by weight (10 parts by weight as a solid content) of PE Wax A was added to 400 parts by weight (100 parts by weight as a solid content) of the polyurethane aqueous composition prepared in Production Example 1 and thoroughly stirred. The obtained coating solution was coated on a metal sheet (a) by a bar coater and bake-dried at a peak metal temperature (PMT) of 80°C or 150°C using a heating furnace at 180°C to form a lubricating film on the metal sheet.

### (Examples 2 to 65 and Comparative Examples 66 to 81)

Surface-lubricated metal sheets were produced in the same manner as in Example 1 by baking a lubricating film having a composition shown in Table 2 (Examples 2 to 45) or Table 3 (Examples 46 to 65 and Comparative Examples 66 to 81) on each metal sheet except for (k). Using an alkali-soluble acrylic aqueous composition as a comparative material of the polyurethane aqueous composition, the film formation was performed in the same manner (Comparative Examples 75 and 78).

### (Examples 82 to 101 and Comparative Examples 102 to 110)

Surface-lubricated metal sheets were produced in the same manner as in Example 1 by baking at a peak metal temperature of 80°C a lubricating film having a composition shown in Table 4 on each metal sheet except for (k). Using, as a comparative material of the polyurethane aqueous composition, the alkali-soluble acrylic aqueous composition used in Comparative Examples 75 and 78, the film formation was performed in the same manner (Comparative Examples 105 and 108).

### (Example 111)

25 Parts by weight (10 parts by weight as a solid content) of PE Wax C was added to 400 parts by weight (100 parts by weight as a solid content) of the polyurethane aqueous composition prepared in Production Example 1 and thoroughly stirred. The obtained coating solution was coated on a substrate metal sheet (ferrite-type E in Table 1) of an alkali-soluble-film surface-lubricated stainless steel sheet for fuel tanks by a bar coater and bake-dried at a peak metal temperature (PMT) of 80°C using a heating furnace at 180°C to form a lubricating film having the composition shown in Table 5 on the metal sheet.

### (Examples 112 to 152 and Comparative Examples 153 to 159)

Alkali-soluble-film surface-lubricated stainless steel sheets were produced in the same manner as in Example 111 by baking a lubricating film having a composition shown in Table 5 (Examples 112 to 131) or Table 6 (Examples 132 to 152 and Comparative Examples 153 to 159) on a substrate metal sheet (k) of the alkali-soluble-film surface-lubricated stainless steel sheet for fuel tanks at a peak metal temperature of 80°C. In Comparative Examples 153 to 159, only a lubricating oil (Wax #122, produced by Johnson) was coated on a substrate metal sheet (k) of the alkali-soluble-film surface-lubricated stainless steel sheet for fuel tanks.

### 6. Text and Evaluation Method

The surface-lubricated metal sheets produced above were evaluated on the following performances.

### (1) Measurement of Elastic Modulus after Coating

The elastic modulus of film after coating on a metal surface was determined under the following conditions using an ultrafine hardness testing machine "FISHER SCOPE H-100" manufactured by Fisher Instrument Co.
- Indenter:
   Vickers quadrangular pyramid-shaped diamond indenter
- Measurement temperature: 25°C
- Maximum penetration depth of indenter:
   1/2 or less of film thickness; in order to eliminate the effect of the metal surface far harder than film, the press fitting (increase of load) was stopped in the depth range where the gradient of a graph configured by the square root F^{1/2} of applied load F and the penetration depth h becomes constant (dF^{1/2}/dh = constant), and subsequently, the load was decreased.
- Applied Load Increasing Mode:
   The load was stepwise increased every 1.0, 2.0 or 4.0 seconds. With the square root F^{1/2} of applied load F and the elapsed time t, dF^{1/2}/dt = constant. In order to reduce the effect of film creep, the load application time was set to 4 seconds at longest.
- Applied Load Decreasing Mode:

The load was stepwise decreased every 1.0, 2.0 or 4.0 seconds. With the square root F^{1/2} of applied load F and the elapsed time t, dF^{1/2}/dt = constant.

### (2) Measurement of Glass Transition Temperature

The dynamic viscoelasticity was measured by a viscoelasticity spectrometer Model VES (manufactured by Iwamoto Seisakusho) under conditions that the exciting frequency was 10 Hz, the temperature-rising rate was 5.0°C/min, the sample length was 5 cm and the amplitude was 0.01 mm. The temperature at the peak of tan δ thereof was used as the glass transition temperature.

### (3) Evaluation of Mold Galling

A molding test was performed under the following conditions using a hydraulic molding tester with a cylindrical punch. As for the temperature conditions in the molding test, the evaluation was performed in two levels of room temperature and mold temperature (100°C or 120°C) elevated due to continuous pressing.

| | |
|---|---|
| Punch diameter | 70 mmφ |
| Blank diameter | 150 mmφ |
| Pressing load | 5 kgf/cm² |
| Molding rate | 3.3×10⁻² m/s |

In all cases, the steel sheet was molded to 80% of the maximum molding height and the mold galling was evaluated according to the following indices.
ⓞ: The steel sheet could be molded and the surface was free of defects.
○: The steel sheet could be molded and the surface was free of defects but the sliding surface was slightly discolored.
Δ: The steel sheet could be molded but a galling flaw was slightly generated on the surface.
×: The steel sheet could be molded but a large number of linear galling flaws were generated on the surface.

Also, the generation of resin debris after working was evaluated according to the following indices.
ⓞ: Debris was not generated.
○: Trace resin debris was generated.
Δ: Resin debris was slightly generated.
×: A large amount of resin debris was generated.

### (4) Evaluation of Press Moldability

In the case of alkali-soluble-film surface-lubricated stainless steel sheet for fuel tanks, the molding test was performed under the following conditions using a hydraulic molding tester with a cylindrical punch and the mold galling was evaluated by the limiting drawing ratio (LDR) and appearance after working. As for the temperature conditions in the molding test, the evaluation was performed in two levels of room temperature and mold temperature (100°C) elevated due to continuous pressing.

| | |
|---|---|
| Punch diameter | 40 mmφ |
| Blank diameter | 68 to 97.5 mm |
| Die diameter | 43 mmφ |
| Wrinkle pressing force | 1 ton |

The lubricating resin-coated steel sheet was not coated with a lubricating oil and the substrate metal sheet was coated with a Johnson Wax #122 lubricating oil.

The mold galling was evaluated according to the following indices.
ⓞ: The steel sheet could be molded and the surface was free of defects.
○: The steel sheet could be molded and the surface was free of defects but the sliding surface was slightly discolored.
Δ: The steel sheet could be molded but a galling flaw was slightly generated on the surface.
×: The steel sheet could be molded but a large number of linear galling flaws were generated on the surface.

### (5) Evaluation of Degreasing Property

The test piece was sprayed with a degreasing solution FC-4358 (produced by Nihon Parkerizing Co., Ltd., pH: adjusted to 0.5, liquid temperature: 40°C) for 8 seconds, then washed with water and dried and thereafter, the film residual ratio was measured by infrared spectroscopic analysis and evaluated according to the following indices. Two kinds of samples were used, a sample on the next day after coating and a sample after the passage of 6 months.
ⓞ: No film.
○: The film residual area percentage was 5% or less.
Δ: The film residual area percentage was more than 5% to 10%.
×: The film residual area percentage was more than 10%.

### (6) Evaluation of Corrosion Resistance

The alkali-soluble-film surface-lubricated stainless steel sheet for fuel tanks was evaluated on the corrosion resistance against gasoline. The steel sheet was drawn into a flat bottom cylinder having a flange width of 80 mm, a diameter of 50 mm and a depth of 20 mm by a hydraulic molding machine and after the working, the lubricating resin film was removed by degreasing. A test solution (gasoline + distilled water (10%) + formic acid (200 ppm)) was charged into the cylinder and after fixing a glass lid through a silicon rubber ring, left standing at 40°C for 5 weeks. After this test, the corroded state was observed with an eye. The evaluation was performed according to the following indices.
○: Red rust generation was less than 0.1%.
Δ: Red rust generation was from 0.1% to less than 5%.
×: Red rust generation was 5% or more.

As seen in Tables 2 and 3, the surface-lubricated metal products according to the present invention exhibit excellent moldability in both cases of room temperature and a mold temperature (100°C) elevated due to continuous pressing, less debris after molding and good film-removability by alkali degreasing over a long period of time irrespective of the peak metal temperature. On the other hand, as shown in Table 3, when the amount of wax added, the film thickness and the elastic modulus after coating each is out of the range specified in the present invention, the alkali degreasability is poor at a high peak metal temperature or after the passing of long time, and resin debris is readily generated after molding.

Furthermore, as shown in Table 4, the surface-lubricated metal products according to the present invention exhibit excellent moldability in both cases of room temperature and a mold temperature (120°C) elevated due to continuous pressing, less debris after molding and good film-removability by alkali degreasing. On the other hand, when the aqueous composition, the amount of wax added, the film thickness and the elastic modulus after coating each is out of the range specified in the present invention, the continuous moldability is poor and resin debris is readily generated after molding.

Still further, as shown in Tables 5 and 6, the alkali-soluble-film surface-lubricated stainless steel sheets for fuel tanks according to the present invention all exhibit excellent results in the press moldability and film-removability by alkali degreasing and also exhibit good corrosion resistance.

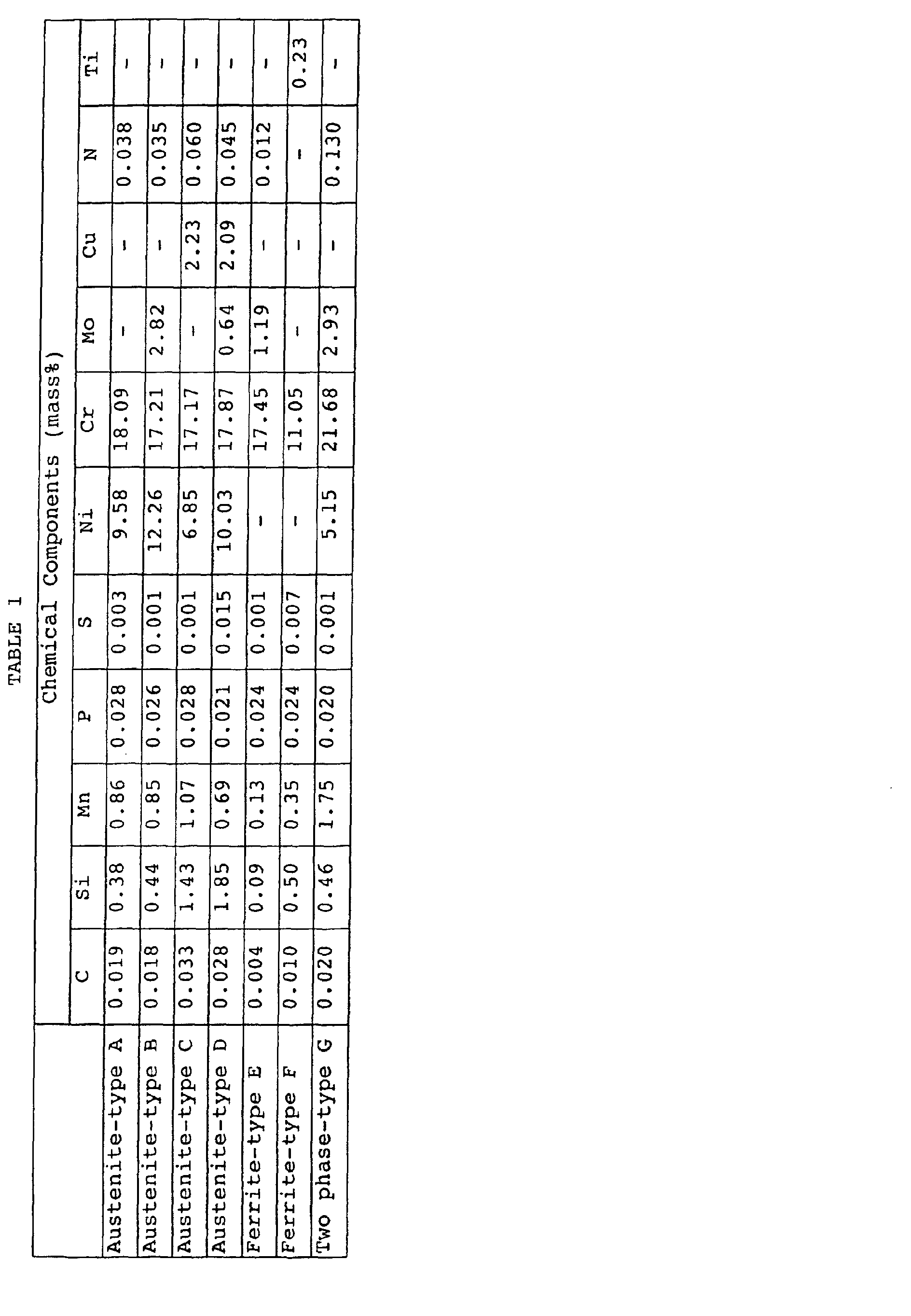

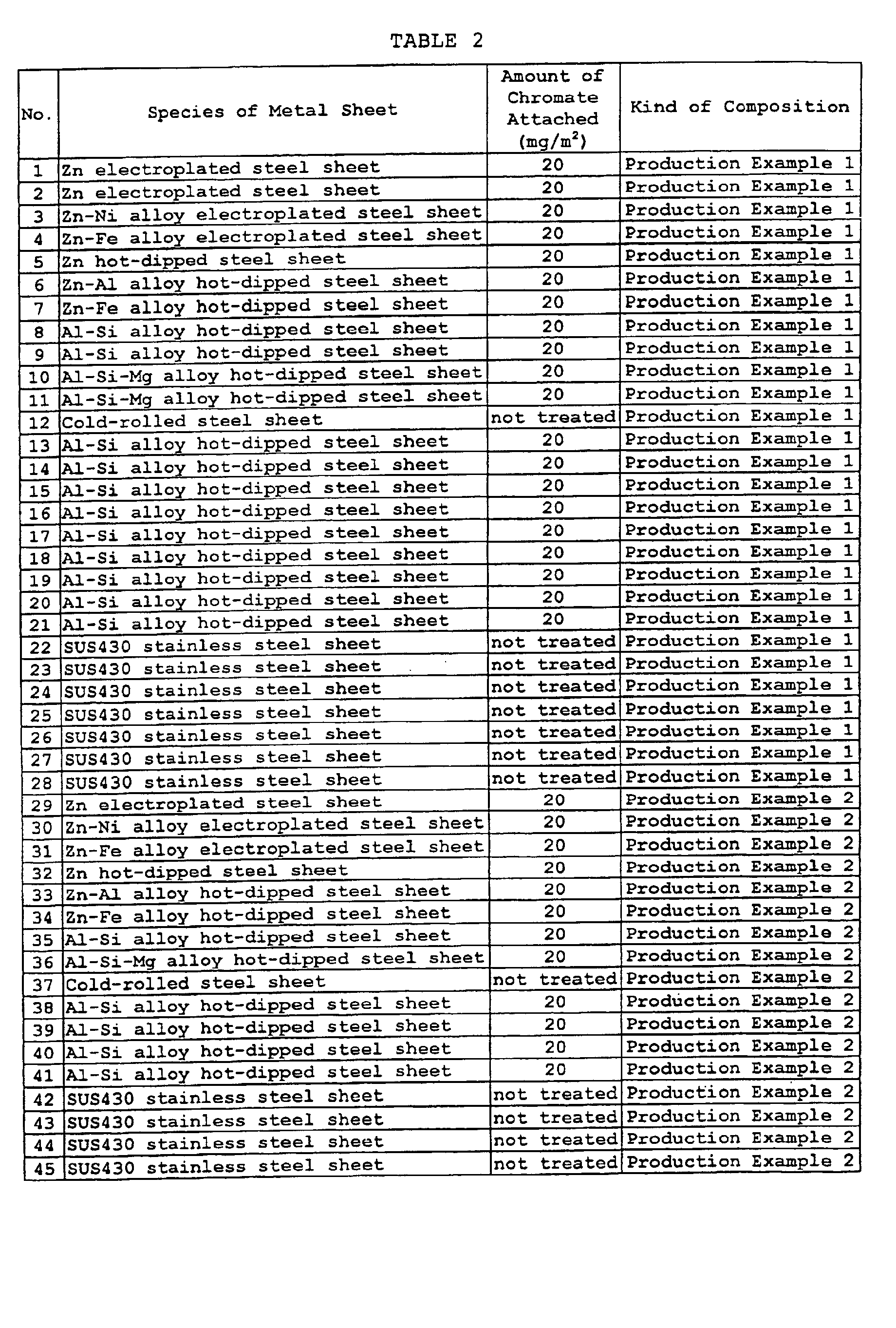

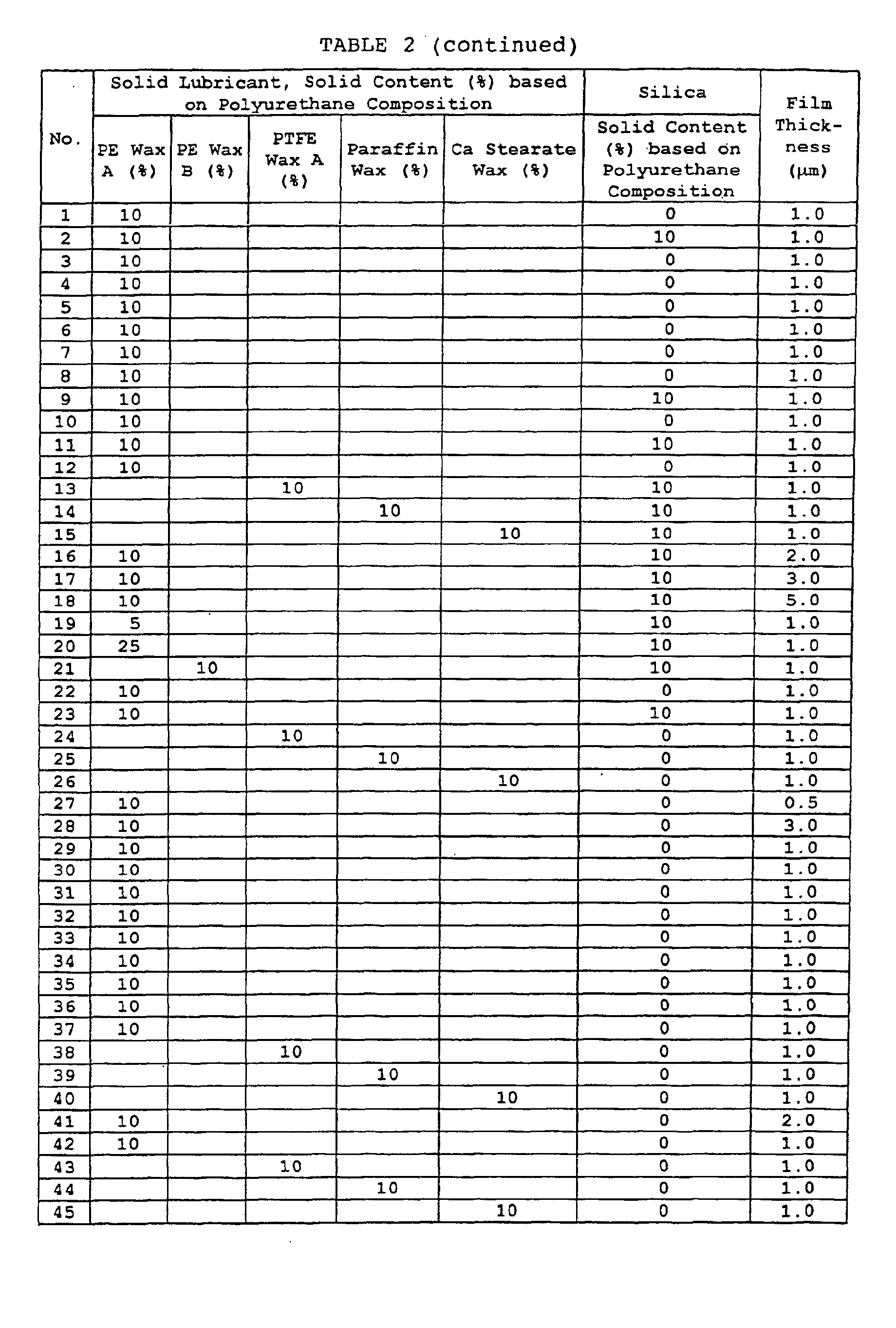

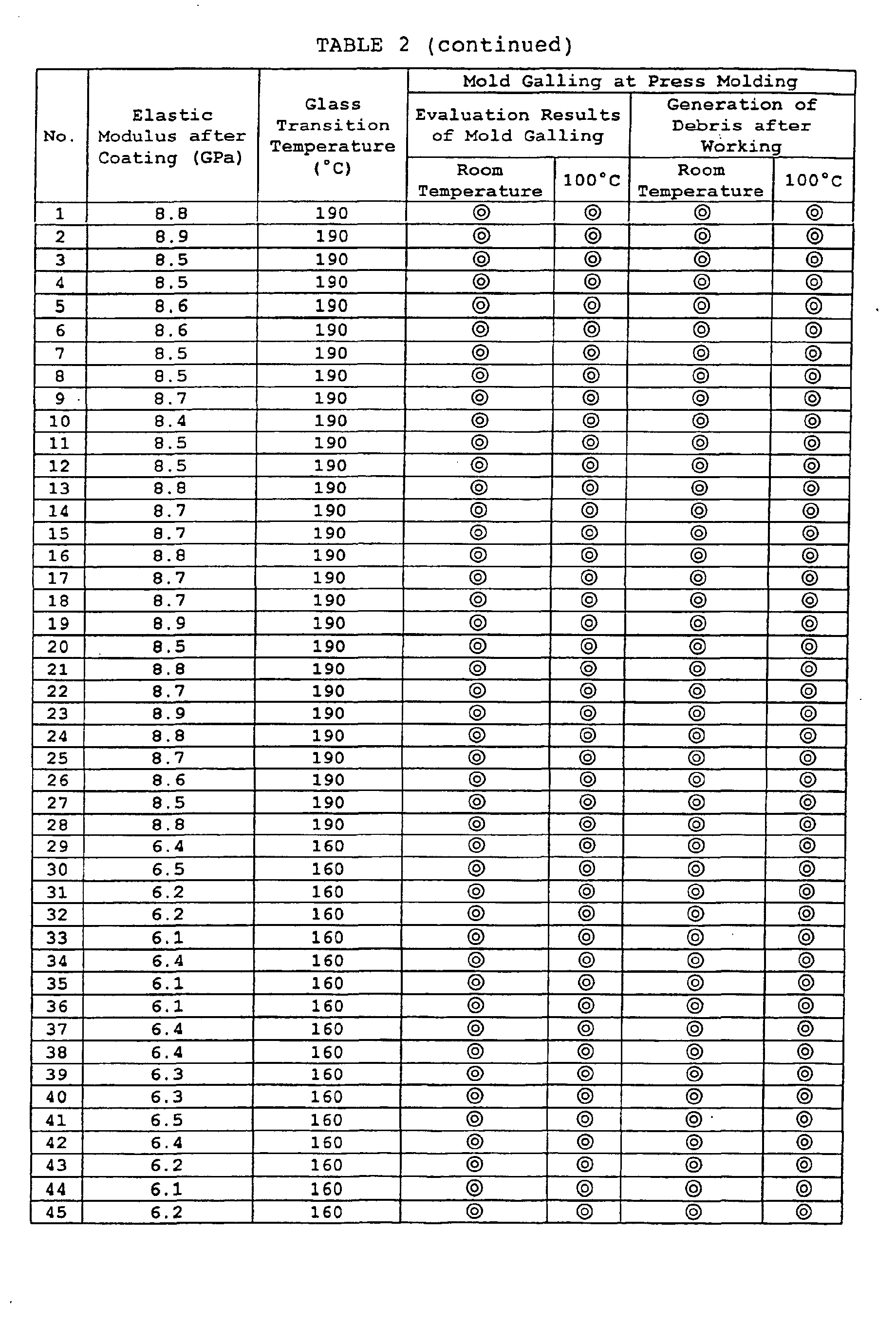

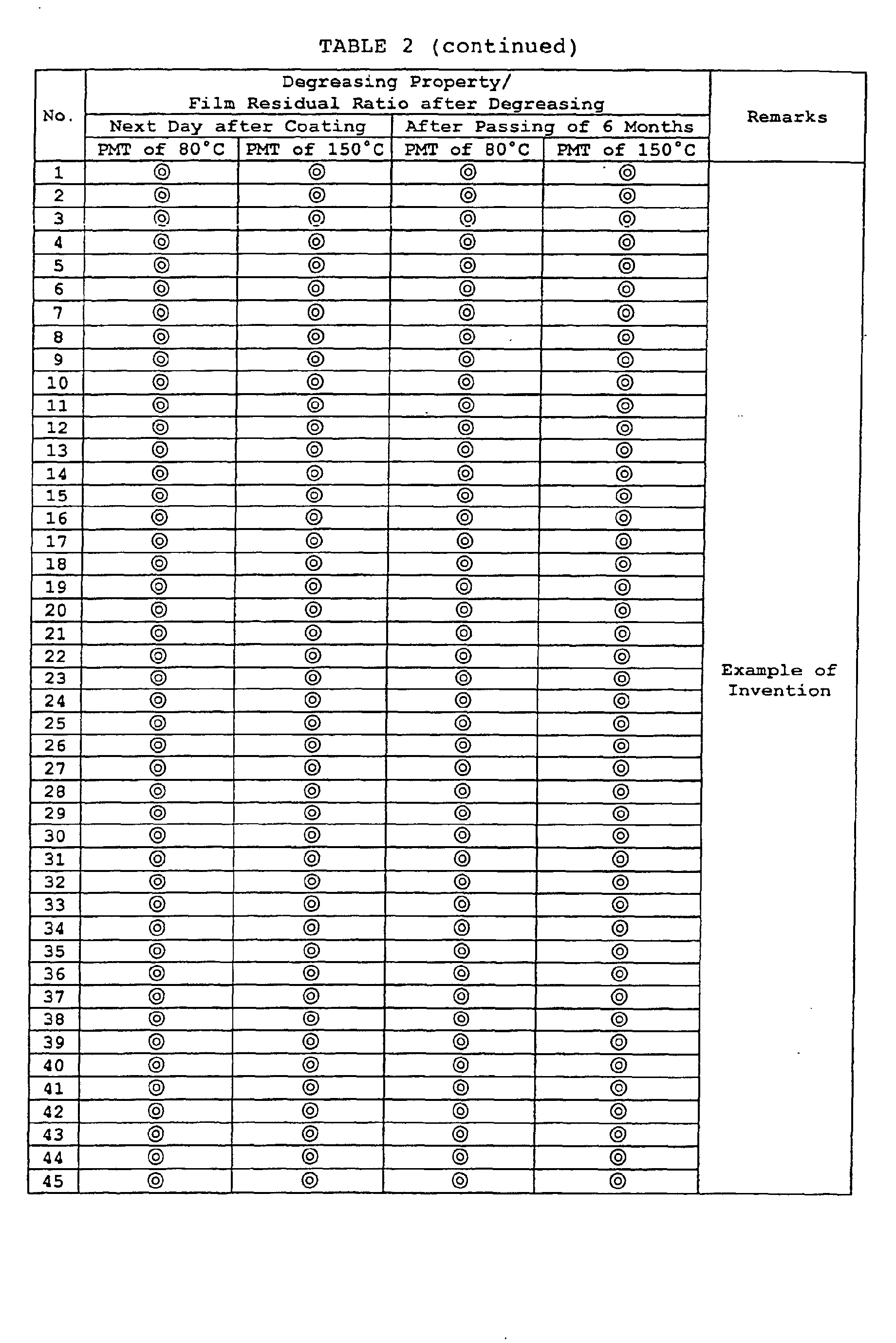

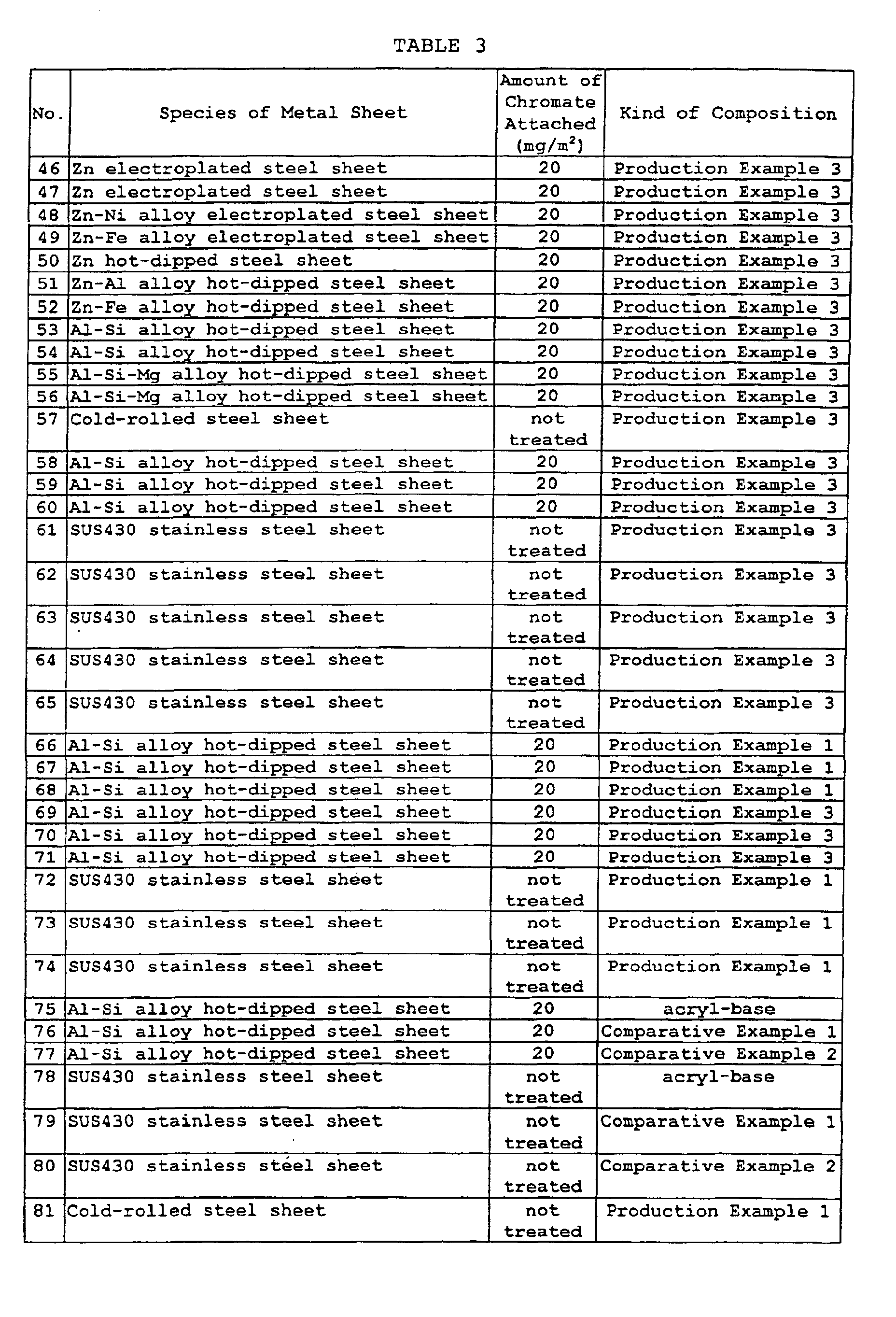

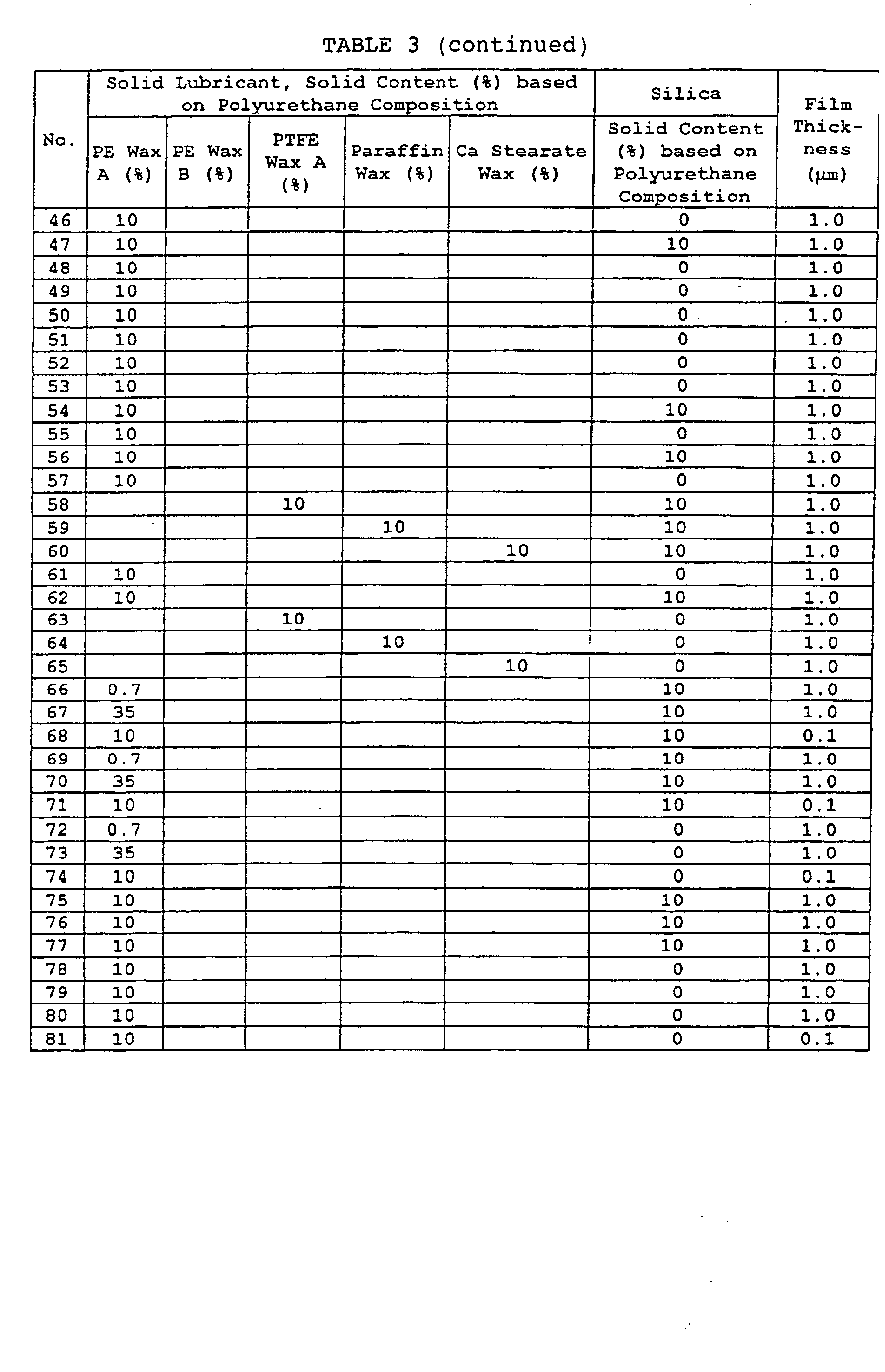

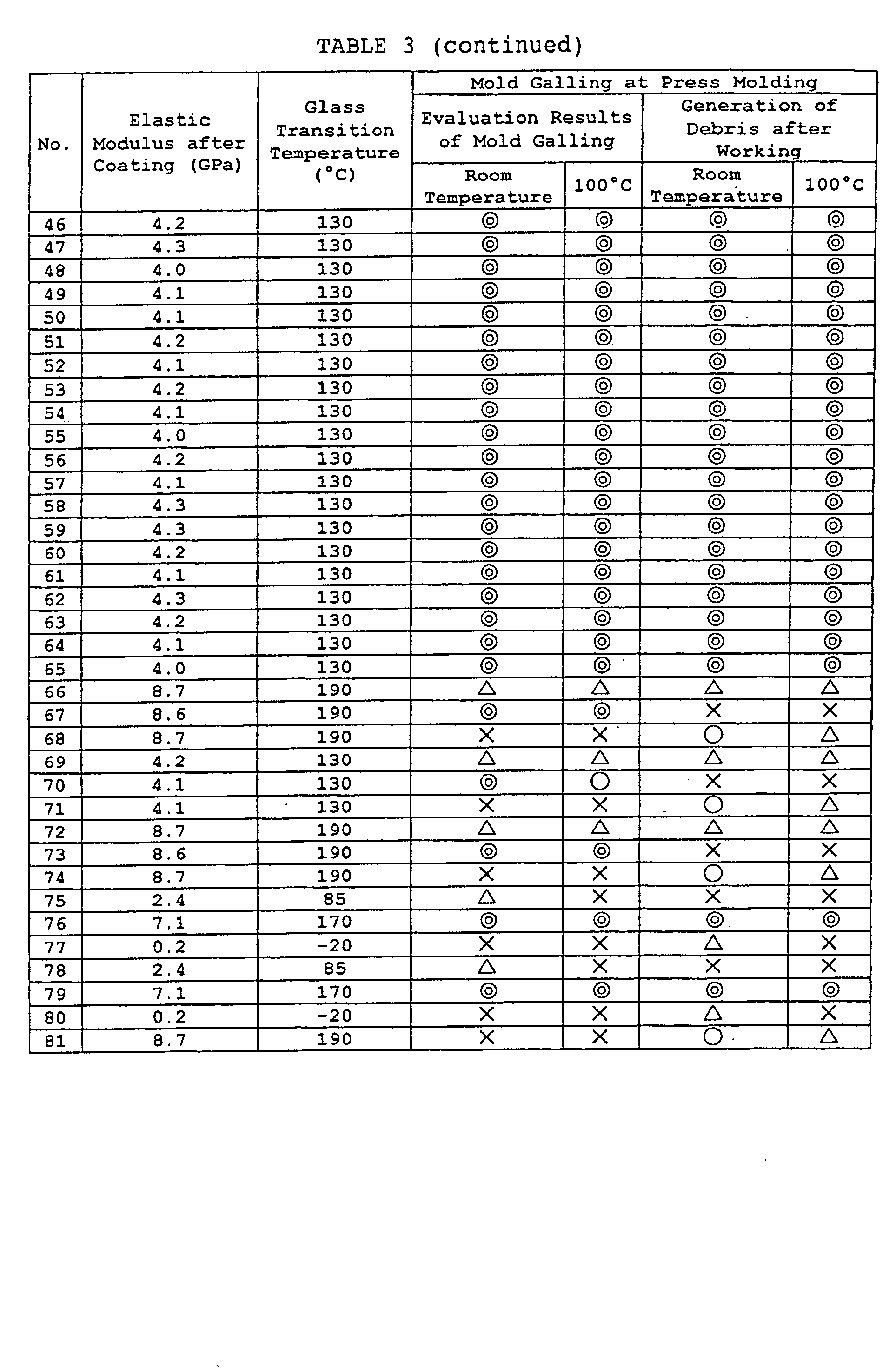

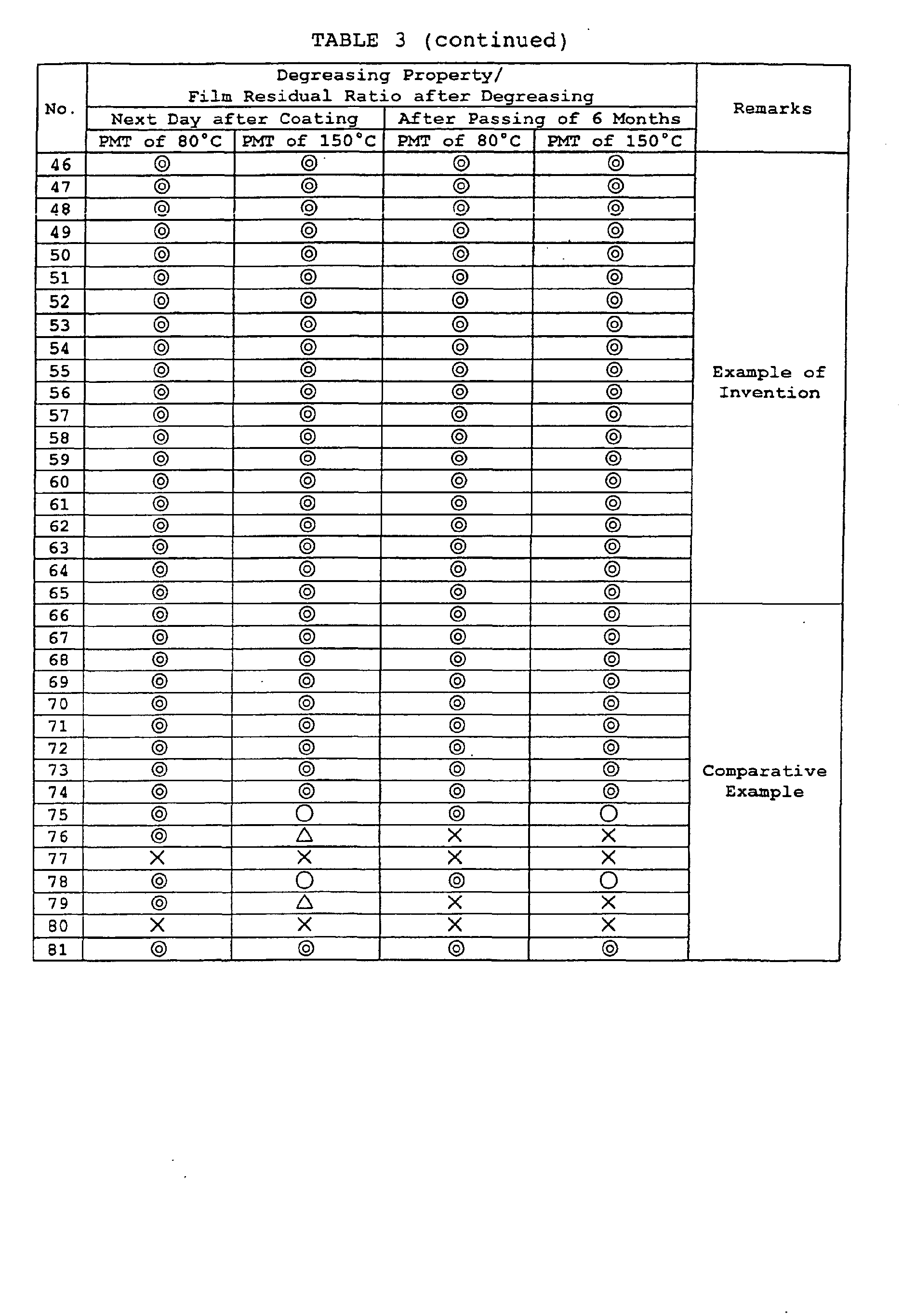

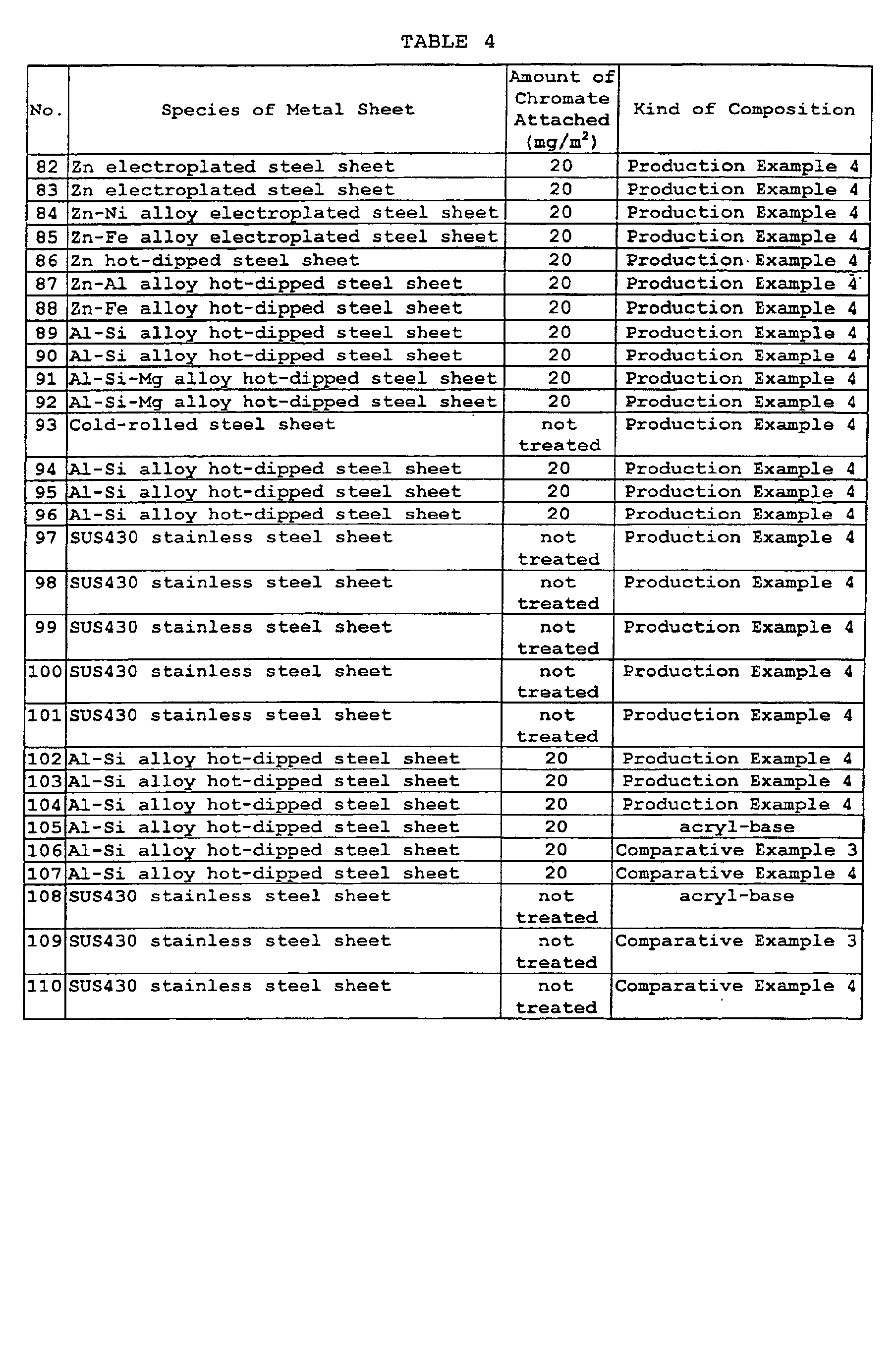

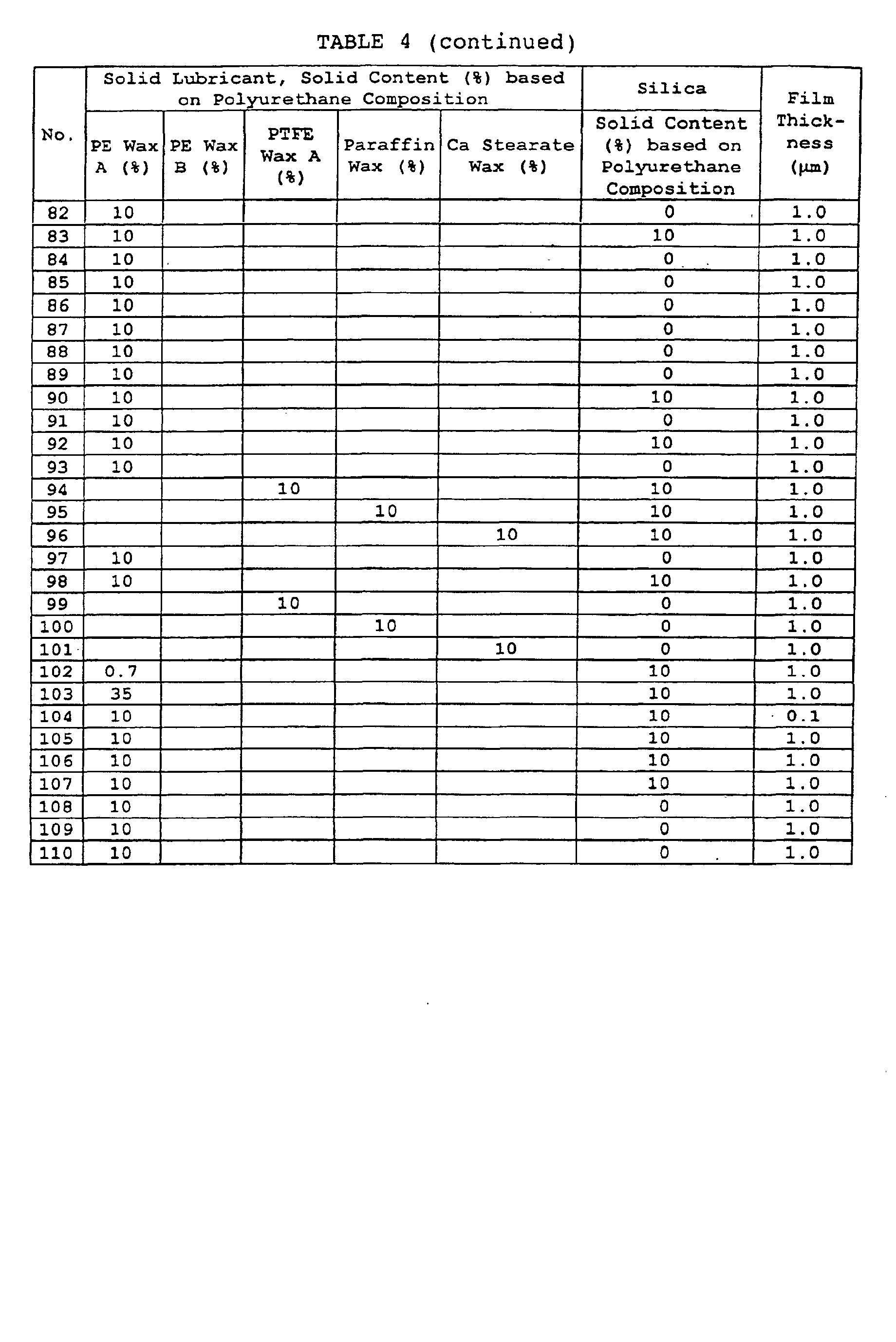

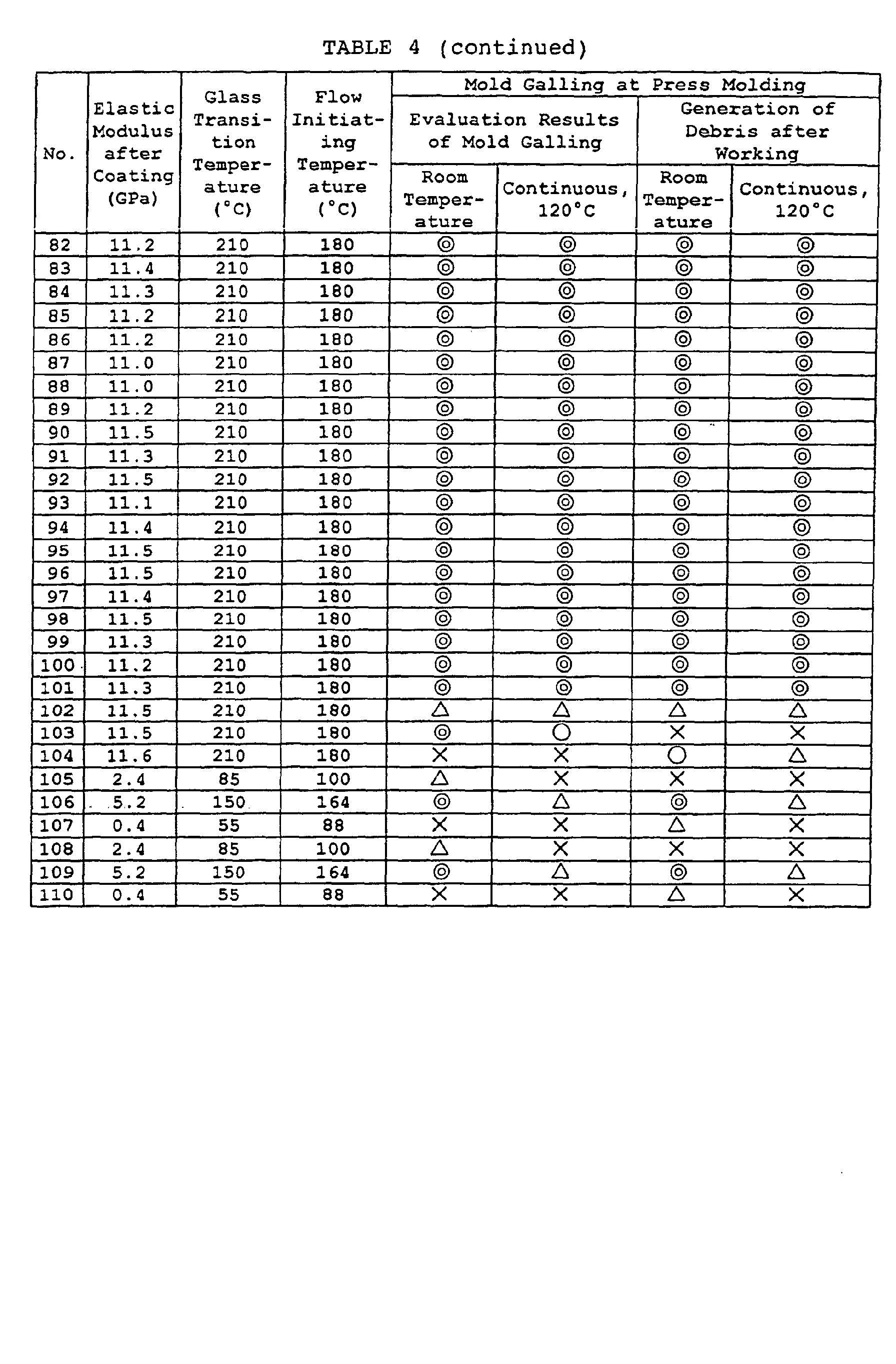

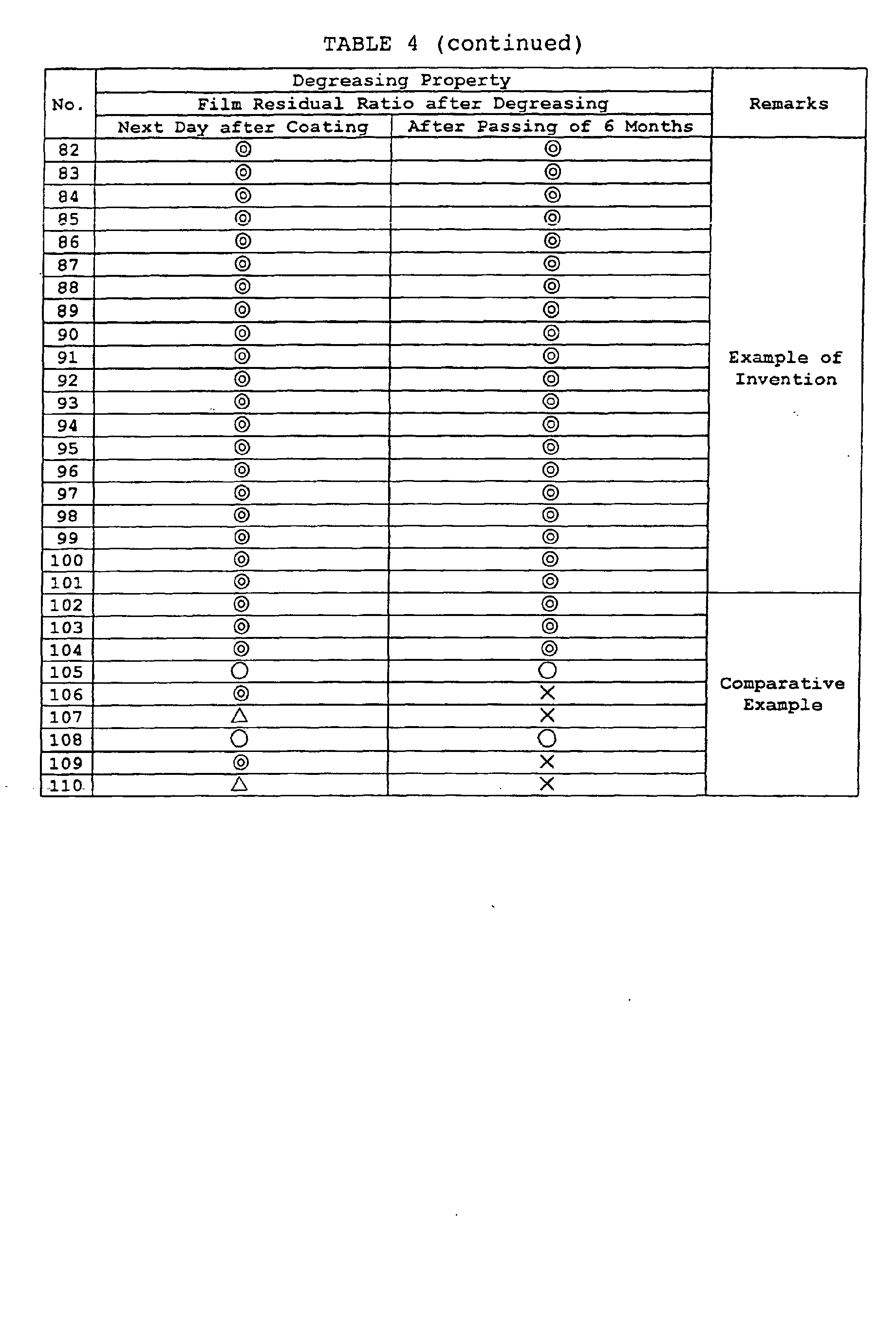

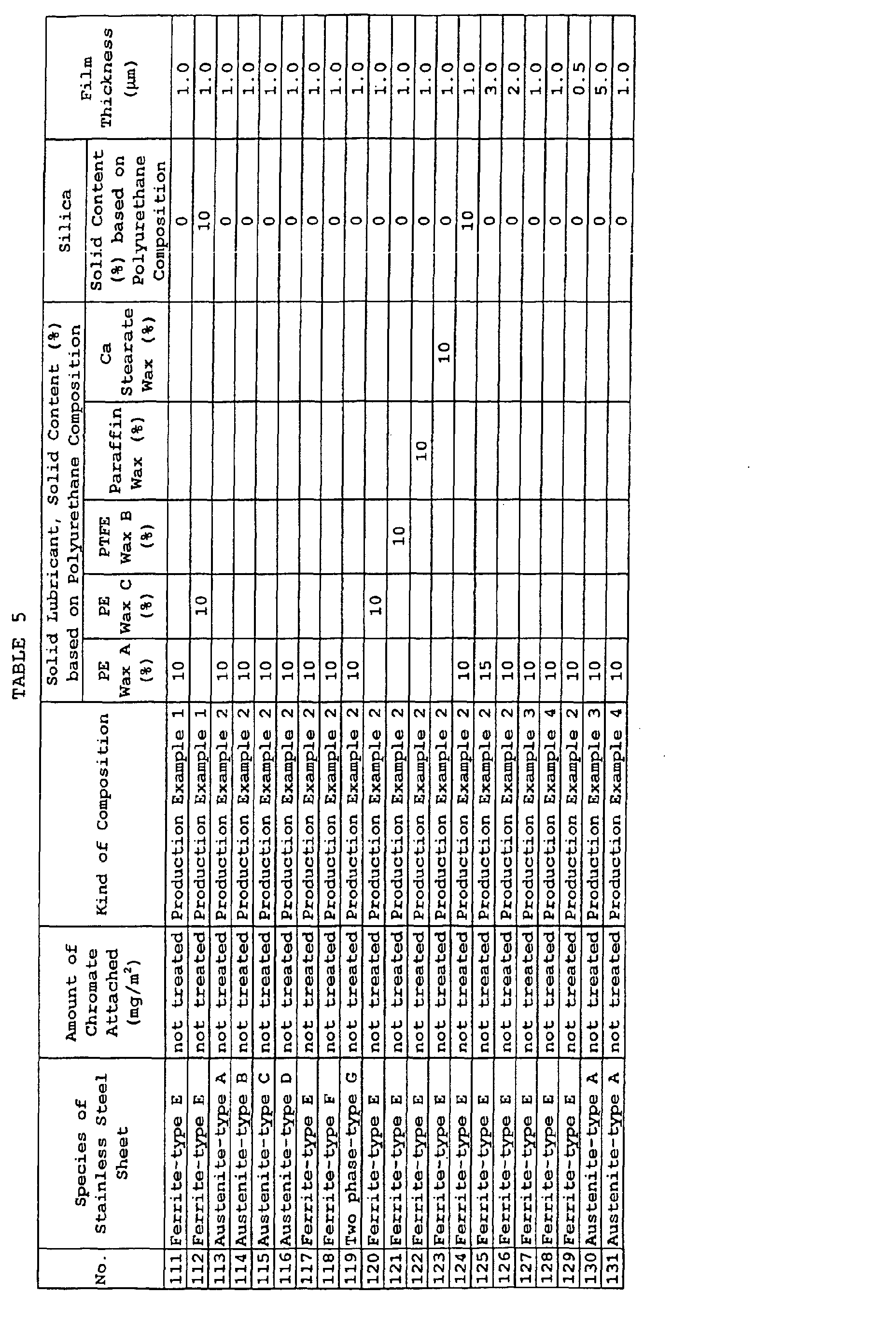

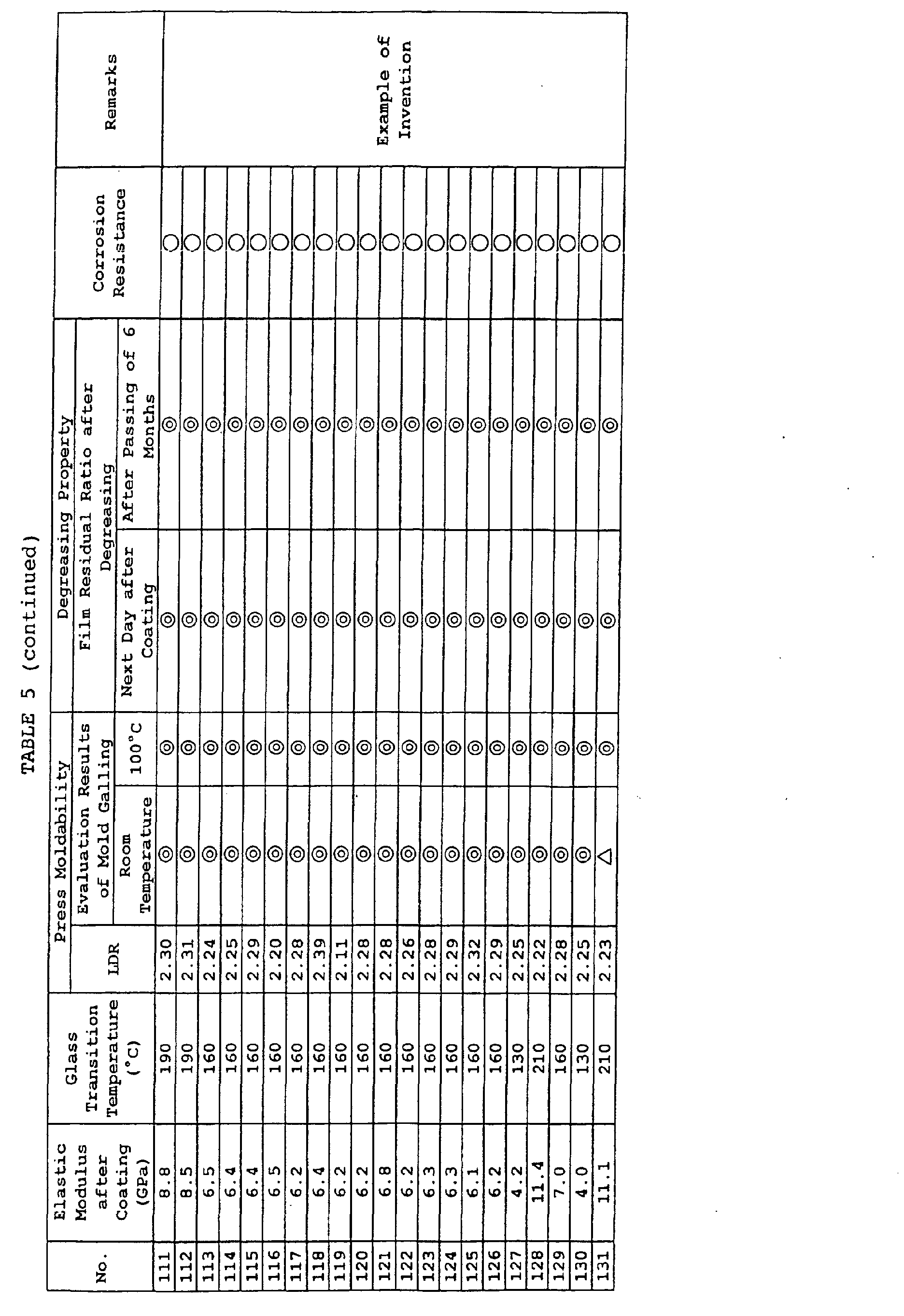

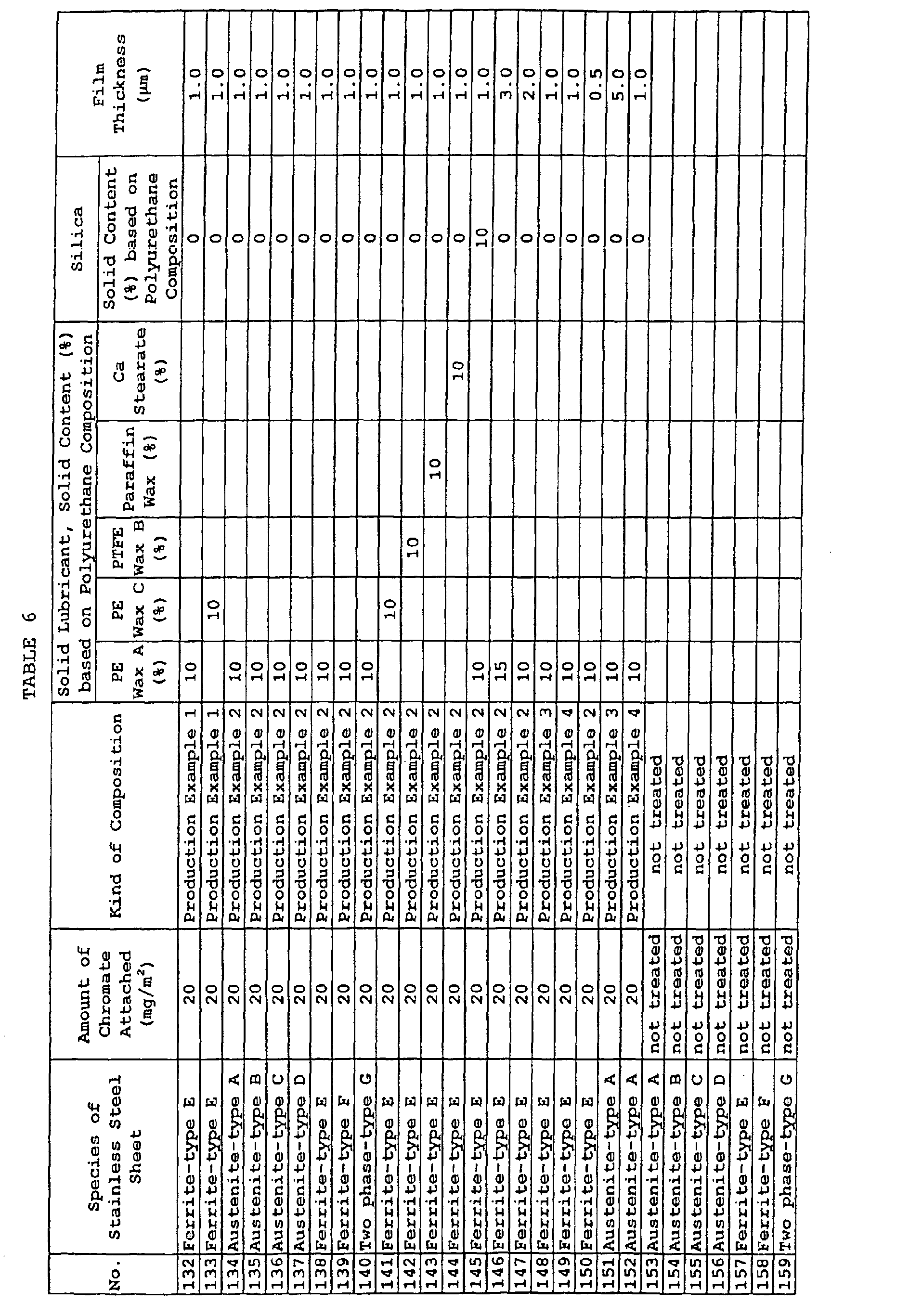

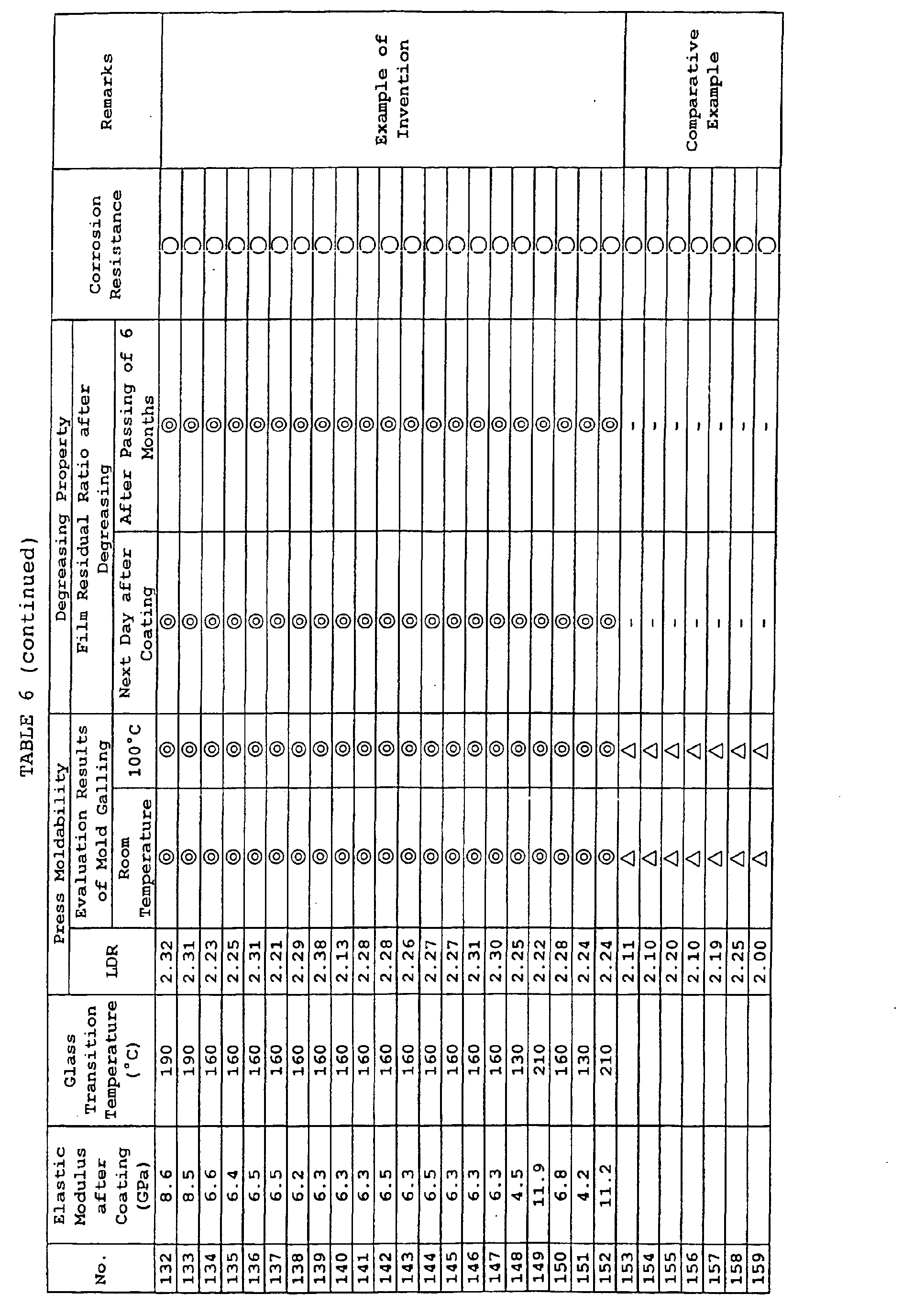

### INDUSTRIAL APPLICABILITY

The metal product of the present invention is free of mold galling even under severe molding conditions, ensures stable film-removability over a long period of time and does not allow the lubricating film to remain after degreasing and, therefore, this metal product is suitably used for uses where the glossy metal surface or metal texture is made good use of or a welding property is demanded. Furthermore, according to the present invention, an alkali-soluble-film surface-lubricated stainless steel sheet with excellent moldability for fuel tanks and a production method of a fuel tank can be provided. Thus, the present invention has a very high industrial value.

## Claims

1. A surface-lubricated metal product excellent in moldability and long-term stable film-removability independent of film drying temperature, comprising a metal having coated on both surfaces or one surface thereof an alkali-soluble lubricating film mainly comprising (A) an alkali-soluble polyurethane aqueous composition containing a polyether polyol as a skeleton and containing a carboxyl group within the molecule and (B) a lubricating function-imparting agent in an amount of 1 to 30 mass% based on said alkali-soluble polyurethane aqueous composition, said film being coated such that the elastic modulus of said alkali-soluble lubricating film after coating is from 0.5 to 20 GPa at 25°C and the film thickness is 0.5 to 10 µm.

2. The surface-lubricated metal product excellent in moldability and long-term stable film-removability independent of film drying temperature as claimed in claim 1, wherein an alkali-soluble lubricating film mainly comprising (A) the alkali-soluble polyurethane aqueous composition, (B) a lubricating function-imparting agent in an amount of 1 to 30 mass% based on said alkali-soluble polyurethane aqueous composition and (C) silica particles in an amount of 1 to 30 mass% based on said alkali soluble polyurethane aqueous composition is coated on both surfaces or one surface of a metal such that the elastic modulus of said alkali-soluble lubricating film after coating is from 0.5 to 20 GPa at 25°C and the film thickness is 0.5 to 10 µm.

3. The surface-lubricated metal product excellent in moldability and long-term stable film-removability independent of film drying temperature as claimed in claim 1 or 2, wherein the glass transition temperature of the alkali-soluble polyurethane aqueous composition (A) in the coated lubricating film is 120°C or more.

4. The surface-lubricated metal product excellent in moldability and long-term stable film-removability independent of film drying temperature as claimed in claim 1 or 2, wherein the amount of the carboxyl group contained in the alkali-soluble polyurethane aqueous composition (A) constituting the alkali-soluble lubricating film is from 30 to 180 mg KOH/g in terms of the acid value.

5. The surface-lubricated metal product excellent in moldability and long-term stable film-removability independent of film drying temperature as claimed in claim 1 or 2, wherein the neutralizer for the carboxyl group contained in the alkali-soluble polyurethane aqueous composition (A) constituting the alkali-soluble lubricating film is sodium hydroxide or potassium hydroxide.

6. The surface-lubricated metal product excellent in moldability and long-term stable film-removability independent of film drying temperature as claimed in claim 1 or 2, wherein the alkali-soluble polyurethane aqueous composition (A) in the coated lubricating film has a hydroxyl group within the molecule.

7. The surface-lubricated metal product excellent in moldability and long-term stable film-removability independent of film drying temperature as claimed in any one of claims 1 to 6, wherein the lubricating function-imparting agent (B) comprises one or more member selected from the group consisting of a polyolefin-base wax, a paraffin-base wax, a stearic acid-base solid lubricant and a wax comprising a fluorine-containing resin.

8. The surface-lubricated metal product excellent in moldability and long-term stable film-removability independent of film drying temperature as claimed in any one of claims 1 to 7, wherein the flow initiating temperature of the alkali-soluble polyurethane aqueous composition (A) constituting the alkali-soluble lubricating film is 170°C or more.

9. The surface-lubricated metal product excellent in moldability and long-term stable film-removability independent of film drying temperature as claimed in any one of claims 1 to 8, wherein the substrate metal is any one stainless steel sheet for fuel tanks, selected from an austenite-type stainless steel sheet, a ferrite-type stainless steel sheet and a two phase-type stainless steel sheet.

10. The surface-lubricated metal product excellent in moldability and long-term stable film-removability independent of film drying temperature as claimed in claim 9, wherein the substrate metal is an austenite-type stainless steel sheet for fuel tanks, comprising, in % by mass:
| | |
|---|---|
| C | 0.5% or less, |
| Si | 5% or less, |
| Mn | 15% or less, |
| P | 0.1% or less, |
| S | 0.05% or less, |
| Ni | 6 to 20%, |
| Cr | 15 to 30%, |
| N | 0.5% or less, and |
| Al | 0.001 to 5% |
with the balance of Fe and inevitable impurities.

11. The surface-lubricated metal product excellent in moldability and long-term stable film-removability independent of film drying temperature as claimed in claim 9, wherein the substrate metal is a ferrite-type stainless steel sheet for fuel tanks, comprising, in % by mass:
| | |
|---|---|
| C | 0.5% or less, |
| Si | 3% or less, |
| Mn | 5% or less, |
| P | 0.1% or less, |
| S | 0.05% or less, |
| Ni | 5% or less, |
| Cr | 9 to 30%, |
| N | 0.2% or less, and |
| Al | 0.001 to 5% |
with the balance of Fe and inevitable impurities.

12. The surface-lubricated metal product excellent in moldability and long-term stable film-removability independent of film drying temperature as claimed in claim 9, wherein the substrate metal is a two phase-type stainless steel sheet for fuel tanks, comprising, in % by mass:
| | |
|---|---|
| C | 0.5% or less, |
| Si | 5% or less, |
| Mn | 15% or less, |
| P | 0.1% or less, |
| S | 0.05% or less, |
| Ni | 2 to 20%, |
| Cr | 12 to 30%, |
| N | 0.5% or less, and |
| Al | 0.001 to 5% |
with the balance of Fe and inevitable impurities.

13. The surface-lubricated metal product excellent in moldability and long-term stable film-removability independent of film drying temperature as claimed in any one of claims 10 to 12, wherein the substrate metal is the stainless steel sheet for fuel tanks, further comprising one or more member of, in % by mass:
| | |
|---|---|
| Mo | 0.01 to 8%, |
| Cu | 0.01 to 5%, |
| Ti | 0.01 to 1%, |
| Nb | 0.01 to 1%, |
| V | 0.01 to 1%, |
| Mg | 0.001 to 0.1%, |
| Ca | 0.001 to 0.1%, |
| B | 0.0005 to 0.05%, and |
| W | 0.01 to 5%. |

14. A method for producing a fuel tank, comprising a step of molding the surface-lubricated metal product coated with a soluble lubricating resin film claimed in any one of claims 9 to 13, a step of treating said molded soluble surface-lubricated metal product with an alkali or hot water to remove said soluble lubricating resin film, and a step of welding said soluble surface-lubricated metal product after the removal of said soluble lubricating resin film.
